(19) Europäisches Patentamt
European Patent Office
Office européen des brevets

(11) **EP 3 367 483 A1**

(12) **EUROPÄISCHE PATENTANMELDUNG**

(43) Veröffentlichungstag:
**29.08.2018 Patentblatt 2018/35**

(51) Int Cl.:
*H01M 4/485* (2010.01)  *H01M 4/58* (2010.01)
*H01M 10/0525* (2010.01)  *H01M 10/0563* (2010.01)

(21) Anmeldenummer: **17170165.9**

(22) Anmeldetag: **09.05.2017**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(30) Priorität: **23.02.2017   EP 17157642**

(71) Anmelder: **Alevo International, S.A.
1920 Martigny (CH)**

(72) Erfinder:
• **Wollfarth, Claudia
76227 Karlsruhe (DE)**
• **Zinck, Laurent
67470 Mothern (FR)**
• **Pszolla, Christian
76185 Karlsruhe (DE)**

(74) Vertreter: **Lemcke, Brommer & Partner
Patentanwälte Partnerschaft mbB
Siegfried-Kühn-Straße 4
76135 Karlsruhe (DE)**

(54) **WIEDERAUFLADBARE BATTERIEZELLE MIT EINEM SEPARATOR**

(57)    Eine wiederaufladbare Batteriezelle (2) hat eine positive Elektrode (4), eine negative Elektrode (5), einen Elektrolyten, der ein Leitsalz umfasst, und einen Separator, der zwischen der positiven Elektrode (4) und der negativen Elektrode (5) angeordnet ist. Die negative Elektrode (5) und die positive Elektrode (4) sind jeweils eine Insertionselektrode. Der Elektrolyt basiert auf $SO_2$. Der Separator (11) umfasst eine Separatorschicht (15, 16), die eine organische Polymerseparatorschicht ist. Die Dicke der organischen Polymerseparatorschicht ist bezogen auf die flächenbezogene Beladung der positiven Insertionselektrode mit aktivem Material kleiner als 0,25 $mm^3$/mg.

Fig.1

EP 3 367 483 A1

**Beschreibung**

Die Erfindung betrifft eine wiederaufladbare elektrochemische Batteriezelle mit einer positiven Elektrode, einer negativen Elektrode, einem Separator, der zwischen der positiven Elektrode und der negativen Elektrode angeordnet ist, einem Elektrolyten, der auf $SO_2$ basiert und ein Leitsalz des aktiven Metalls der Zelle enthält.

Wiederaufladbare Batteriezellen sind auf vielen technischen Gebieten von großer Bedeutung. Entwicklungsziele sind insbesondere eine hohe Energiedichte (Ladungskapazität je Gewichts- und Volumeneinheit), eine hohe Strombelastbarkeit (geringer Innenwiderstand), eine hohe Lebensdauer über viele Lade- und Entladezyklen, eine sehr gute Betriebssicherheit und möglichst geringe Kosten.

Der Separator ist ein wichtiges Funktionselement jeder Batteriezelle. Seine Aufgabe ist die elektrische Isolation der positiven und der negativen Elektroden der Batteriezelle. Gleichzeitig gewährt er, dass durch Ionenleitung ein für die Funktion der Zelle erforderlicher Ladungstransport zwischen den Elektroden stattfinden kann. Dazu muss der Separator mit der Elektrolytlösung benetzt sein und von dieser durchdrungen werden.

Kommerziell am weitesten verbreitete wiederaufladbare Batterien mit organischen Elektrolytlösungen sind in der Praxis nahezu ausschließlich LithiumIonen-Zellen. Ihre negative Elektrode besteht aus auf Kupfer beschichtetem Kohlenstoff, in den beim Laden Lithiumionen eingelagert werden. Auch die positive Elektrode besteht aus einem Insertionsmaterial, das zur Aufnahme von Ionen des aktiven Metalls geeignet ist. In der Regel basiert die positive Elektrode auf Lithiumkobaltoxid, das auf ein Ableitelement aus Aluminium beschichtet ist. Beide Elektroden sind sehr dünn (Dicke in der Regel kleiner als 100 $\mu$m). Beim Laden werden die Ionen des aktiven Metalls aus der positiven Elektrode ausgelagert und in die negative Elektrode eingelagert. Beim Entladen läuft der umgekehrte Prozess ab. Der Transport der Ionen zwischen den Elektroden erfolgt mittels des Elektrolyten, der die erforderliche Ionenbeweglichkeit gewährleistet. Lithium-Ionen-Zellen enthalten einen Elektrolyten, der aus einem in einem unpolaren organischen Lösungsmittel oder Lösungsmittelgemisch (z.B. auf Basis von Ethylencarbonat) gelösten Lithiumsalz (z.B. $LiPF_6$) besteht. Sie werden nachfolgend auch als "organische Lithium-Ionen-Zellen" bezeichnet.

Überwiegend alle kommerziell erhältlichen organischen Lithium-Ionen-Zellen besitzen einen Separator aus einem mikroporösem Polyolefin Material, wie z.B. Polypropylen oder Polyethylen. Der Elektrolyt organischer Lithium-Ionen-Zellen aus unpolaren organischen Lösungsmitteln benetzt den ebenfalls unpolaren Polyolefin Separator und gewährt somit den Ionentransport zwischen den Elektroden durch den Separator hindurch.

Schon seit langem werden auf $SO_2$ basierende Elektrolyten für Lithiumzellen diskutiert. In

(1) "Handbook of Batteries", David Linden (Editor), 2. Auflage, McGraw-Hill, 1994

wird insbesondere auf die hohe ionische Leitfähigkeit eines auf $SO_2$ basierenden anorganischen Elektrolyten verwiesen. Auch hinsichtlich weiterer elektrischer Daten sei dieser Elektrolyt vorteilhaft. Systeme mit einem auf $SO_2$ basierenden Elektrolyten seien deshalb längere Zeit untersucht worden und für spezielle Anwendungen von Interesse. Die weitere kommerzielle Anwendbarkeit sei jedoch beschränkt, insbesondere weil der Elektrolyt stark korrosiv ist.

Ein Vorteil des auf $SO_2$ basierenden Elektrolyten ist, dass er - im Gegensatz zu den organischen Elektrolyten der in der Praxis gebräuchlichen LithiumIonen-Zellen - nicht brennen kann. Die bekannten Sicherheitsrisiken von Lithium-Ionen-Zellen werden insbesondere durch deren organischen Elektrolyten verursacht. Wenn eine Lithium-Ionen-Zelle Feuer fängt oder sogar explodiert, bildet das organische Lösungsmittel des Elektrolyten das brennbare Material.

Schwefeldioxid ist ein polares Lösungsmittel. Damit ein Separator mit der anorganischen auf $SO_2$ basierenden Elektrolytlösung benetzt wird, werden Separatoren auf anorganischer Basis verwendet. Anorganische Separatoren, wie z.B. Separatoren auf der Basis von Glasfasermaterial, bestehen aus polaren Materialien wie z.B. Metalloxiden. Damit kann der Elektrolyt den Separator gut benetzen. Der Ionentransport durch den Separator wird damit gewährleistet.

Es besteht ein hohes Bedürfnis nach verbesserten wiederaufladbaren Batteriezellen, die insbesondere folgende Anforderungen erfüllen:

- Sehr gute elektrische Leistungsdaten, insbesondere hohe gravimetrische und volumetrische Energiedichten bei gleichzeitig hohen entnehmbaren Strömen (Leistungsdichte).
- Sicherheit, auch unter den erschwerten Umweltbedingungen in einem Fahrzeug.
- Hohe Lebensdauer, Langzeitstabilität, d.h. insbesondere hohe Zahl nutzbarer Lade- und Entladezyklen.
- Möglichst niedriger Preis, d.h. kostengünstige Materialien
- Möglichst einfache Produktionsverfahren.

Auf dieser Grundlage liegt der Erfindung das technische Problem zugrunde, einen Separator für Batteriezellen mit auf $SO_2$ basierenden Elektrolyten zur Verfügung zu stellen, der - unter Erhaltung der vorteilhaften elektrischen Eigenschaften, insbesondere der Langzeitstabilität, der elektrochemischen Batteriezelle - zu einer Erhöhung der Energiedichte und einem vereinfachten Aufbau der Batteriezellen führt.

Dieses technische Problem wird gelöst durch eine wiederaufladbare elektrochemische Batteriezelle mit den Merkmalen des Anspruchs 1. Die Batteriezelle hat eine positive Elektrode, eine negative Elektrode, einen Separator und einen Elektrolyten, der $SO_2$ und ein Leitsalz des aktiven Metalls der Zelle enthält. Erfindungsgemäß sind die negative Elektrode und die positive Elektrode jeweils eine Insertionselektrode. Der Elektrolyt basiert auf $SO_2$ und der Separator umfasst eine Separatorschicht, die eine organische Polymerseparatorschicht ist. Die Dicke der organischen Polymerseparatorschicht bezogen auf die flächenbezogene Beladung der positiven Insertionselektrode mit aktivem Material ist erfindungsgemäß kleiner als 0,25 $mm^3$/mg.

Die Beladung der positiven Elektrode mit aktivem Material wird jeweils auf die Fläche von 1 $cm^2$ bezogen, es ergibt sich die flächenbezogene Einheit der Beladung mit mg/$cm^2$. Betrachtet man die Dicke des Separators im Verhältnis zur flächenbezogenen Beladung erhält man Werte mit der Einheit $mm^3$/mg. Damit können unabhängig von der Elektroden- und Separator-Flächenausdehnung verschiedene Systeme miteinander verglichen werden.

Durch die Kombination der erfindungsgemäßen Merkmale wird eine erhebliche Verbesserung der Funktion der Zellen erreicht.

Um das Verhältnis von Separatordicke zu Beladung gering zu halten wurde im Rahmen der Erfindung erkannt, dass zum einen die Beladung hoch und zum anderen der Polymerseparator dünn sein müssen. Je kleiner das Verhältnis von Separatordicke zu Beladung ist, desto größer ist die Steigerung der Energiedichte, d.h. desto mehr Kapazität ist pro Gewichtseinheit bzw. Volumeneinheit in der Zelle vorhanden.

Im Stand der Technik wurden in der WO 2011/098233 durch die Verwendung von dreidimensionalen Strom-ableitern Lithium-Ionen-Zellen mit hohen Beladungen der positiven Elektrode von bis zu 140 mg/$cm^2$ in Kombination mit auf $SO_2$-basierender Elektrolytlösung offenbart. Über die Art des Separators schweigt sich dieses Dokument aus.

Auch das US-Patent 9,209,458 B2 beschreibt wiederaufladbaren Lithium-Ionen-Batteriezellen mit Insertions-elektroden, die eine auf $SO_2$-basierende Elektrolytlösung verwenden. Beladungen der positiven Elektrode werden hier mit bis zu 180 mg/$cm^2$ angegeben. Diese Zellen besitzen Separatoren aus anorganischen Materialien wie Oxiden, Carbiden oder Silikaten. Beispielsweise werden Materialien aus Glasfaser benutzt.

Die Anmeldung WO 2013/024045 beschreibt ebenfalls Lithium-Ionen-Batterien mit anorganischer, auf $SO_2$-ba-sierender Elektrolytlösung, die Separatoren auf Basis von Glasfasern verwenden. Das Glasfaser-Material ist ein Textilmaterial aus unterschiedlichen textilen Faser-Verbundstrukturen, wie z.B. Gewebe, Vliese und Gewirke aus Glasfasern. Das Dokument beschreibt Zellen, in denen mindestens eine der Elektroden von einer Umhüllung aus einem Glasfaser-Textilmaterial umhüllt ist. Über die Beladung der positiven Elektrode mit aktiven Material schweigt sich dieses Dokument aus.

Im Stand der Technik wird als entscheidender Vorteil bei der Verwendung von Glasfaserseparatoren in Kom-bination mit einer auf $SO_2$-basierenden Elektrolytlösung die gute Benetzbarkeit des Materials mit der Elektrolytlösung angesehen. Durch die polaren Eigenschaften des Separators dringt der Elektrolyt gut in den Separator ein und erlaubt den für den Betrieb der Zelle absolut erforderlichen Ionentransport zwischen den Elektroden. Weitere Vorteile von Separatoren auf der Basis von anorganischen Materialien sind die chemische und mechanische Stabilität gegenüber dem korrosiven, auf $SO_2$ basierenden Elektrolyt und gegenüber den eventuell entstehenden Überladeprodukten, wie z.B. Aluminiumchlorid und Sulfurylchlorid. Aufgrund der oft größeren Dicken von Glasfaserseparatoren kann Elektrolyt beim Befüllen der Zelle auch von oben durch den Separator zu den Elektroden gelangen. Durch erfolgreiche elektrische Kurzschlusstests wurden nachgewiesen, dass ein Elektronentransport durch den Separator gut verhindert wird.

Den erläuterten Vorteilen von Separatoren auf Basis von anorganischen Materialien, insbesondere von Separatoren, die aus Glasfasermaterialien bestehen, stehen nach herrschender Meinung aber auch viele Nachteile gegenüber. Eine bestimmte Dicke kann nicht unterschritten werden, da das gewebte Glasfasermaterial sonst zu durchlässig wird und in der Folge Kurzschlüsse entstehen. Zudem werden durch die erforderlichen Dicken bzw. Volumina des Glasfaserseparators das Gewicht und der Raumbedarf der Zelle erhöht. Das Resultat ist eine Verminderung der gravimetrischen (Wh/kg) und volumetrischen (Wh/l) Energiedichte.

Die Verarbeitung von Fasermaterial ist schwierig; beim Schneiden kann das Material ausfransen, wenn nicht aufwendige Maßnahmen getroffen werden. Zusätzlich entstehen gesundheitsschädliche Kleinpartikel.

Eine Kurzschlussgefahr wird dadurch begründet, dass Fasern brechen oder verschoben werden können oder durch die schlechte Homogenität, z.B. durch Webfehler des Textilmaterials. Durch die Bruchgefahr der Fasern besteht keine Möglichkeit den Glasfaserseparator eng, z.B. um Kanten, zu biegen. Es werden materialaufwendige Taschen gefertigt, die zusätzliche Klebekomponenten benötigen, um geschlossen zu werden.

Trotz der vielen Nachteile von Glasfaserseparatoren werden aufgrund der korrosiven Eigenschaften des $SO_2$-Elektrolyts und dessen Reaktionsprodukte heute im Stand der Technik bei wiederaufladbaren Lithiumionen-Batte-riezellen mit $SO_2$-Elektrolyten ausschließlich inerte Separatoren auf Basis von Glasfasern eingesetzt.

Im Rahmen der vorliegenden Erfindung wurde überraschenderweise festgestellt, dass sehr gute elektrische Leistungsdaten, insbesondere eine hervorragende Langzeitstabilität, auf erheblich einfachere Weise erzielt werden können, wenn für eine wiederaufladbare elektrochemische Batteriezelle mit einer positiven Elektrode, einer negativen Elektrode, einem Separator und einem Elektrolyten, der $SO_2$ und ein Leitsalz des aktiven Metalls der Zelle enthält, ein Separator verwendet wird, der eine Separatorschicht umfasst, die eine organische Polymerseparatorschicht ist, und die Dicke der organischen Polymerseparatorschicht bezogen auf die flächenbezogene Beladung der positiven Insertionselektrode mit aktivem Material kleiner als 0,25 mm$^3$/mg ist.

Auf der Grundlage der vor der Erfindung vorliegenden Informationen konnte nicht erwartet werden, dass eine Li-SO$_2$-Zelle mit einem Polymerseparator funktionsfähig und sogar besonders vorteilhaft sein würde, da viele organische Polymere, wie z.B. Polypropylen oder Polyethylen, in einer auf SO$_2$ basierenden Elektrolytlösung mit Überladeprodukten nicht stabil sind.

Im Stand der Technik wird berichtet, dass durch die korrosiven Elektrolytbestandteile der organische Polymerseparator zerstört wird und Kurzschlüsse die Folge sind. In der Batteriezelle sollen sicherheitskritische Zustände auftreten, die in einem "thermal runaway" münden können und dadurch die gesamte Zelle mit Gehäuse zerstören. Deshalb werden im Stand der Technik in Li-SO$_2$-Zellen keine Polymer-Separatoren verwendet, sondern Separatoren auf Glasfaserbasis.

Im Stand der Technik wird davon ausgegangen, dass die Benetzung eines unpolaren Feststoffes, also einer organischen Polymerseparatorschicht, mit einer polaren Flüssigkeit, also einer auf SO$_2$-basierenden Elektrolytlösung, ungenügend ist. Dadurch wird das Polymer nicht benetzt bzw. durchdrungen. Der Ionentransport zwischen positiver und negativer Elektrode durch den Separator wird behindert bzw. ist nicht möglich.

Die Befüllung der Batteriezelle wird durch die Verwendung einer relativ dünnen Polymerseparatorschicht erschwert, da der Elektrolyt, wie z.B. bei einem dicken Glasfaserseparator, nicht von oben durch den Separator seitlich zur Elektrode gelangen kann. Der Elektrolyt muss innerhalb der Elektroden von oben nach unten transportiert werden.

Polymerseparatoren haben eine geringe Porosität. Die übliche Porosität bekannter Polymerseparatoren liegt bei ca. 40%. Im Gegensatz dazu haben Glasfaserseparatoren eine Porosität von ca. 50%. Der Innenwiderstand der Batteriezelle wird aufgrund der geringen Porosität höher. Die Strombelastbarkeit der Zelle sinkt. Hochstromanwendungen hält der Fachmann deshalb für nicht möglich.

Polymerseparatoren haben eine geringe Dicke und sind dadurch mechanisch sehr anfällig. Gerade dicke Elektroden mit dreidimensionalem Stromableiter, dessen Stege und Kanten an der Elektrodenoberfläche und besonders an den Elektrodenkanten in Berührung mit dem Polymerseparator kommt, können diesen leicht beschädigen. Die Dicke eines Separators spielt eine wesentliche Rolle. Je dicker der Separator ist, desto leichter lässt er sich in der Zellherstellung handhaben. Ein Fachmann sieht deshalb in der geringen Dicke eines Polymerseparators einen weiteren Hinderungsgrund für seine Verwendung.

Beim Einbringen des Zellstapels aus positiven und negativen Elektroden und dazwischenliegenden Separatoren, beim anschließenden Befüllen mit Elektrolyt und beim späteren Zykeln der Zelle entsteht ein Druck auf das Elektrodenpaket. Ein dünner Polymerseparator ist sehr anfällig bei Druck durch die Elektroden, da die Rauhigkeit von dicken Elektroden mit einem dreidimensionalen Stromableiter wesentlich höher ist als z.B. bei Li-Ionen-Folienelektroden. Zum einen dringt der Abrieb der Elektroden in den Polymerseparator ein, zum anderen können Metallspikes des dreidimensionalen Stromableiters den Separator durchstoßen. Kurzschlüsse mit all ihren Konsequenzen sind die Folge.

Auch der Zusammenbau einer Zelle wird durch die Verwendung eines Polymerseparators erschwert. Elektrostatische Aufladungen oder ein Zusammenrollen des Polymerseparators beeinträchtigen das exakte Stapeln des Elektrodenpakets. Durch die glatte Oberfläche des Polymerseparators verrutschen die Elektroden gegeneinander. Auch die Trocknung der Zellen wird schwieriger, da Wasser aus den Elektroden nicht durch einen offenporigen Separator nach oben abdampfen kann. Zusätzlich schrumpft ein Polymerseparator bei erhöhter Temperatur und die exakte elektrische Trennung von positiver und negativer Elektrode kann beeinträchtigt werden.

In organischen Lithiumionenbatterien mit einer negativen Kohlenstoffelektrode wird beim ersten Laden einer Zelle ein Teil der verfügbaren Ladungsmenge, also der Menge an aktivem Metall (= Lithiumionen) zur Bildung einer Deckschicht auf der negativen Elektrode verbraucht. Dabei reagiert Lithium mit der organischen Elektrolytlösung zu deckschichtbildenden Substanzen.

Auch bei Zellen mit auf SO$_2$ basierender Elektrolytlösung findet eine Deckschichtbildung statt. Befinden sich organische Bestandteile in der Zelle, also z.B. ein Polymerseparator, könnten diese durch Bestandteile der Elektrolytlösung oder elektrochemisch reduziert werden und mit Ionen des aktiven Metalls weitere Deckschichten bilden. Die Deckschichtkapazität wird also erhöht und damit die Energiedichte erniedrigt.

Ein SO$_2$-Elektrolyt zeichnet sich durch eine hohe Leitfähigkeit aus. Ein Fachmann würde deshalb diesen Elektrolyten nicht mit einem Polymerseparator, der die Leitfähigkeit verringert, kombinieren.

Erste Versuche mit Li-SO$_2$-Zellen in Kombination mit Polymerseparatoren lieferten keine brauchbaren Ergebnisse, da keine vollständige Befüllung der Zelle mit Elektrolytlösung erreicht wurde. Die Polymerseparatoren wurden nicht benetzt und Elektrolyt gelangte zudem nicht in ausreichender Menge in die Poren der Elektroden. Um dennoch eine Benetzung der Elektroden und Separatoren zu erzielen wurden mehrere verschiedene Maßnahmen durchgeführt.

Unter anderem wurde ein Vakuum in der Zelle geschaffen und der Elektrolyt dann einströmen gelassen. Weitere Versuche beschäftigten sich mit einer Druckerhöhung in der Zelle nach dem Befüllen oder mit dem Erwärmen der befüllten Zelle auf 40°C - 50 °C. Auch die Befüllgeschwindigkeit wurde variiert oder die Zelle wurde nach der Befüllung für längere Zeit stehengelassen. Außerdem wurden kommerziell erhältliche Polymerseparatoren mit werksseitig aufgebrachten Benetzungshilfen, sogenannten "wetting agents" eingesetzt, um eine Benetzung zu erreichen.

Alle erprobten Maßnahmen konnten keine Verbesserungen in der Benetzung der Zellkomponenten mit dem auf $SO_2$ basierendem Elektrolyt erzielen. Die Zelle konnte nicht vollständig befüllt werden. Im letzten Fall war das "wetting agent" nicht systemkompatibel. Unerwünschte Nebenreaktionen wurden beobachtet.

Trotz der vorherrschenden Meinung und Erkenntnisse im Stand der Technik und der gegenläufigen Informationen und Ergebnisse der Voruntersuchungen, die im Vorfeld erhalten wurden, wurde im Rahmen der vorliegenden Erfindung überraschenderweise festgestellt, dass sehr gute elektrische Leistungsdaten, insbesondere eine hervorragende Langzeitstabilität, für eine Li-$SO_2$-Zelle erzielt werden können. Erfindungsgemäß werden diese Eigenschaften erzielt, wenn eine Li-$SO_2$-Zelle verwendet wird, in der eine positive Elektrode mit einer hohen Beladung an aktivem Material kombiniert wird mit einem Polymerseparator, der elektrolytkompatibel ist und von dem Elektrolyten durchdrungen wird.

Um das Problem der Benetzbarkeit zu lösen und das Durchdringen des Elektrolyten durch den Separator zu gewährleisten, findet erfindungsgemäß eine Modifizierung der Zelle und/oder des Polymerseparators statt. Folgende Maßnahmen wurden im Rahmen der Erfindung als geeignet erkannt:

Kühlung der Batteriezelle

Ein Zellstapel mit ein oder mehreren positiven Elektroden, negativen Elektroden und dazwischenliegenden Polymerseparatoren wird in einem Gehäuse platziert. Das Gehäuse wird mit auf $SO_2$-basierender Elektrolytlösung befüllt und verschlossen. Es erfolgt eine Kühlung der gesamten Batterie auf Temperaturen < -20°C. Anschließend wird die Batterie wieder auf Raumtemperatur gebracht. Das Zykelverhalten ist dem einer Zelle mit einem Glasfaserseparator aus dem Stand der Technik vergleichbar.

Modifizierung des Separators

Es ist möglich die Oberflächenenergie des Separators an die Oberflächenspannung der $SO_2$ basierten Elektrolytlösung anzupassen. Dazu können polare Gruppen auf die äußere und eventuelle auch auf die innere Oberfläche des Separators aufgebracht werden.
Durch die Behandlung des Polymerseparators mit einem Plasma können z.B. oxidhaltige Oberflächengruppen auf der Oberfläche gebildet werden. Dadurch senkt sich die Oberflächenenergie des Separators und eine Benetzung/ Durchdringung mit Elektrolytlösung kann erfolgen.

Ähnliche Effekte ergeben sich bei der Beschichtung der Polymerseparatoroberfläche mit einem geeigneten Benetzungsmittel.

Bei allen Modifizierungen des Separators ist auf die chemische Kompatibilität der Oberflächengruppen bzw. der Additive zu den Bestandteilen der Elektrolytlösung und den Elektrodenmaterialien zu achten. Die Oberflächengruppen und Additive müssen zudem elektrochemisch stabil sein und sich bei denen in einer Batteriezelle herrschenden Spannungen nicht zersetzen.

Variation der Porenstruktur

Durch den Einsatz eines Polymerseparators aus einem nichtgewebten ("non woven") Vliesmaterial wird die Porenstruktur des Separators im Gegensatz zu der Porenstruktur einer Polymerseparator-Membran verändert. Polymervliesmaterialien haben eine lineare Porenstruktur, das bedeutet, dass eine Vielzahl von Poren senkrecht zur Oberfläche verlaufen. Diese Porenstruktur gewährleistet die Benetzung und Durchdringung des Polymervlieses mit auf $SO_2$ basierter Elektrolytlösung. Batteriezellen können mit Polymerseparatoren aus nichtgewebtem Material betrieben werden.

Erst nachdem eine entsprechende Maßnahme durchgeführt wurde und die Benetzung und Durchdringung des Polymerseparators mit auf $SO_2$ basierter Elektrolytlösung erreicht ist, können mit der erfindungsgemäßen elektrochemischen Batteriezelle hervorragende Leistungen erzielt werden.

Bei der Verwendung der erfindungsgemäßen wiederaufladbaren Batteriezelle bei der die Dicke der organischen Polymerseparatorschicht bezogen auf die flächenbezogene Beladung der positiven Insertionselektrode mit aktivem Material kleiner als 0,25 mm³/mg ist, ergeben sich die unten genannten Vorteile in Bezug auf die Zelldaten und die Verarbeitung und Herstellung der Batteriezelle. Die Vorteile sind insbesondere deutlich und verstärkt, wenn bevorzugt gilt, dass das flächenbezogene Volumen der organischen Polymerseparatorschicht bezogen auf die flächenbezogene Beladung der positiven Insertionselektrode mit aktivem Material kleiner als 0,20 mm³/mg, bevorzugt kleiner als 0,15 mm³/mg, bevorzugt kleiner als 0,10 mm³/mg, besonders bevorzugt kleiner als 0,05 mm³/mg ist. Die zusammengefassten Vorteile sind die folgenden:

Zelldaten:

- Polymerseparatoren haben eine Dicke von z.B. 10 - 90 $\mu$m und sind damit dünner als Separatoren auf anorganischer Basis z.B. als Separatoren aus Glasfasergewebe mit einer Dicke von 120 $\mu$m. Der Volumenbedarf von dünneren Separatoren ist geringer. Daher werden in Kombination mit positiven Elektroden mit hoher Beladung von z.B. 100 mg/cm$^2$ aktiver Masse Zellen mit einer um 5 - 7% höheren volumetrischen Energiedichte erreicht im Vergleich zu Zellen in denen Glasfaserseparatoren verwendet werden Ähnliches gilt für die gravimetrische Energiedichte. Durch das geringere Flächengewicht (Polymervlies z.B. 36 g/m$^2$) im Vergleich zu dem Flächengewicht eines Glasfaser-separators (125 g/m$^2$) wird Gewicht innerhalb der Zelle eingespart. Höhere gravimetrische Energiedichten werden erreicht.

- Trotz der ungünstigen Porenstruktur und der geringen Porosität von Polymerseparatoren von ca. 40 - 50 % ist überraschend der Innenwiderstand einer entsprechenden Zelle nicht höher, als der Innenwiderstand einer vergleichbaren Zelle mit einem Glasfaserseparator.

- Die Zykelstabilität ist gut und absolut vergleichbar mit der Zykelstabilität von Zellen aus dem Stand der Technik mit Separatoren aus Glasfasergewebe. Die nutzbare Kapazität einer Batteriezelle nimmt von Zyklus zu Zyklus ab. Unter Zykelstabilität versteht man die Anzahl der Lade- und Entlade-Zyklen bis die Kapazität auf einen vorher festgelegten Prozentsatz der Ausgangskapazität (z.B. 70 %) zurückgegangen ist. Je mehr Zyklen erreicht werden, desto höher ist die Lebensdauer einer Batteriezelle.

- Beim ersten Laden einer Batteriezelle wird auf der negativen Elektrode eine Deckschicht gebildet. Für die Deckschichtbildung werden Ionen des aktiven Metalls verbraucht, die dann der Zelle nicht mehr als Kapazität im weiteren Betrieb zur Verfügung stehen. Diese Deckschichtkapazität sollte deshalb nach herrschender Meinung gering sein. Die erfindungsgemäße Batteriezelle weist überraschender Weise eine Deckschichtkapazität bei der Verwendung des Polymerseparators auf, die vergleichbar ist mit einer Zelle, die einen Glasfaserseparator verwendet.

- Trotz der teils geringen Porosität von Polymerseparatoren und den dadurch erwarteten hohen Innenwiderständen sind Hochstrombelastungen von 2C problemlos möglich. Das bedeutet, dass eine Entladung der gesamten Kapazität der Zelle in einer halben Stunde möglich ist. So könnte z.B. eine Zelle mit einer Kapazität von 1 Ah mit einem Strom von 2 A in einer halben Stunde entladen werden.

- Das Wachstum von Lithiumdendriten durch den Separator ist aufgrund der kleinen Poren nicht wahrscheinlich und konnte auch im Rahmen der Erfindung nicht festgestellt werden.

- Beim Zykeln einer Batteriezelle wird ein Teil der zugeführten oder abgegebenen Energie aufgrund des Innenwiderstands innerhalb der Zelle in Form von Wärme frei und als Abwärme an die Umgebung abgeführt. Überraschenderweise wird bei der Verwendung von Polymerseparatoren trotz der ungünstigeren Porenstruktur im Vergleich zu Zellen, die einen Glasfaserseparator enthalten, keine erhöhte Abwärme erzeugt.

Verarbeitung/Herstellung

- Die Verarbeitung von flexiblen Polymerseparatoren in Kombination mit positiven Elektroden mit hoher Beladung und entsprechender Dicke ist einfacher als z.B. die Verarbeitung von Glasfasermaterialien. Die Polymerseparatoren geben mechanische Stabilität bei der Verarbeitung/Herstellung der Zelle.

- Durch die Flexibilität von Polymerseparatoren ist ein Z-Folding des Separators möglich. Damit fällt weniger Schneidarbeit an.

- Separatortaschen oder (einlagige) Separatorumhüllungen für die dicken positiven Elektroden können einfach durch Verschweißen hergestellt werden. Es ist kein zusätzlicher Kleber oder eine zusätzliche schweißfähige Folie notwendig.

- Die Prüfspannung kann hoch sein, da die Durchschlagsfestigkeit höher ist als bei Glasfaser. Dadurch sind bessere und aussagekräftigere Prüfungen möglich, die zu einer verbesserten Qualitätskontrolle führen.

Bevorzugte Ausführungsformen und Varianten der erfindungsgemäßen Batteriezellen werden anhand der einzelnen Bestandteile beschrieben, die einzeln oder in Kombination auftreten können.

Positive Elektrode

Als aktive Masse der positiven Elektrode wird eine Komponente der Zelle bezeichnet, die bei der an der positiven Elektrode ablaufenden Redoxreaktion ihren Ladungszustand ändert. Bei den erfindungsgemäßen Zellen liegt die aktive Masse der positiven Elektrode als Insertionsverbindung bevorzugt als Interkalationsverbindung vor, in die das aktive Metall eingelagert werden kann. Beim Entladen einer solchen Zelle werden Ionen des aktiven Metalls in die positive aktive Masse eingelagert. Aus Gründen der Ladungsneutralität führt dies zu einer Elektrodenreaktion der positiven aktiven Masse an der Elektrode, bei der ein Elektron von einem Ableitelement der Elektrode in die positive aktive Masse übertritt. Beim Laden findet der umgekehrte Prozess statt: Das aktive Metall (beispielsweise Lithium) wird als Ion aus der positiven aktiven Masse ausgelagert, wobei ein Elektron von dieser in das Ableitelement der positiven Elektrode übertritt. Die positive Elektrode enthält ein aktives Material der Zusammensetzung

$$A_a M_b (X_c Y_d)_e Z_f$$

wobei

A ein Alkalimetall, ein Erdalkalimetall, ein Metall der Gruppe 12 des Periodensystems oder Aluminium, bevorzugt Lithium, Natrium, Calcium, Zink oder Aluminium, besonders bevorzugt Lithium ist,
M ein Metall oder mehrere Metalle umfasst, ausgewählt aus der Gruppe bestehend aus den Übergangsmetallen und/oder den Nicht-Übergangsmetallen und/oder den Halbmetallen,
$(X_c Y_d)_e$ mindestens ein erstes Anion ist,
Z mindestens ein zweites Anion ist,

wobei a≥0; b>0; c>0; d≥0; e>0 und f≥0 und
wobei a, b, c, d, e und f so gewählt sind, dass Elektroneutralität erhalten wird.
Bevorzugt umfasst M ein oder mehrere Metalle ausgewählt aus den Metallen Titan, Vanadium, Niob, Tantal, Hafnium, Chrom, Molybdän, Wolfram, Mangan, Eisen, Osmium, Kobalt, Nickel, Palladium, Platin, Kupfer, Silber, Gold, Zink, Kadmium, Aluminium, Scandium, Yttrium, Zirkonium, Technetium, Rhenium, Ruthenium, Rhodium, Iridium, Quecksilber, Gallium, Indium, Zinn, Blei, Bismut, Selen, Magnesium, Kalzium , Beryllium, Strontium und Barium, Bor, Silizium, Germanium, Arsen, Antimon und Tellur.
Bevorzugt enthält X ein oder mehrere Elemente ausgewählt aus den Elementen Titan, Vanadium, Chrom, Arsen, Molybdän, Wolfram, Niob, Mangan, Aluminium, Selen, Bor, Sauerstoff, Kohlenstoff, Silizium, Phosphor, Stickstoff, Schwefel, Fluor, Chlor, Brom und Iod, wobei Phosphor und Schwefel bevorzugt sind.
Bevorzugt enthält das erste Anion $(X_c Y_d)_e$ die Gruppen $PO_4$ oder $P_2 O_7$ oder $SO_4$.
Bevorzugt ist Y ausgewählt aus einem oder mehreren Halogenen, aus schwefelhaltigen Gruppen, aus sauerstoffhaltigen Gruppen oder Mischungen davon.
Bevorzugt ist Z ausgewählt aus einem oder mehreren Halogenen, aus hydroxidhaltigen Gruppen oder Mischungen davon.
Es ist bevorzugt, dass, wenn a=0 ist, $(X_c Y_d)_e$ kein Phosphid ist.
Bevorzugt ist M das Metall Fe (Eisen). Besonders bevorzugt ist M das Metall Fe und das Anion $(X_c Y_d)_e$ ist $PO_4$ oder $P_2 O_7$, wobei besonders bevorzugt f gleich 0 ist.
Weiter besonders bevorzugt sind Eisenphosphate des aktiven Metalls, zum Beispiel $LiFePO_4$ oder $LiFeP_2 O_7$.
Die positive Insertionselektrode der erfindungsgemäßen Batteriezelle, wie auch die negative Elektrode, weisen, wie üblich, ein Ableitelement auf, das aus Metall besteht und dazu dient, den erforderlichen elektronisch leitenden Anschluss des aktiven Materials der jeweiligen Elektrode zu ermöglichen. Das Ableitelement steht in Kontakt zu dem an der Elektrodenreaktion der jeweiligen Elektrode beteiligten aktiven Material.
Vorzugsweise ist das Ableitelement der positiven Elektrode, besonders bevorzugt auch das Ableitelement der negativen Elektrode, in Form einer dreidimensionalen porösen Metallstruktur, insbesondere in Form eines Metallschaums, ausgebildet. Der Begriff "dreidimensionale poröse Metallstruktur" bezeichnet dabei jede aus Metall bestehende Struktur, die sich nicht nur, wie ein dünnes Blech, über Länge und Breite der flächigen Elektrode erstreckt, sondern auch über deren Dickendimension, wobei sie derartig porös ist, dass das aktive Material der Elektrode in die Poren eingearbeitet werden kann. Die Menge an eingearbeitetem aktivem Material ist die Beladung. Ableitelement und aktive Masse der positiven Elektrode bilden die positive Insertionselektrode.

Die Beladung der positiven Insertionselektrode mit aktivem Material, bezogen auf ihre Fläche, sollte mindestens 30 mg/cm$^2$, bevorzugt mindestens 40 mg/cm$^2$, weiter bevorzugt mindestens 60 mg/cm$^2$, weiter bevorzugt mindestens 80 mg/cm$^2$, weiter bevorzugt mindestens 100 mg/cm$^2$, weiter bevorzugt mindestens 120 mg/cm$^2$ und besonders bevorzugt mindestens 140 mg/cm$^2$ betragen. Die maximale Beladung einer Elektrode sollte 1000 mg/cm$^2$ sein, bevorzugt 750mg/cm$^2$ und weiter bevorzugt 500 mg/cm$^2$ und noch weiter bevorzugt 250 mg/cm$^2$.

Gleichzeitig ist die positive Insertionselektrode mindestens 0,25 mm, bevorzugt mindestens 0,3 mm, weiter bevorzugt mindestens 0,4 mm, weiter bevorzugt mindestens 0,5 mm und besonders bevorzugt mindestens 0,6 mm dick. Die maximale Dicke einer Elektrode ist 5,0 mm, bevorzugt 3,0 mm und weiter bevorzugt 1,0 mm.

Mit der großen Dicke der positiven Elektrode und der entsprechend hohen Beladung mit aktivem Material sind wesentliche Vorteile verbunden. Insbesondere ist die Kapazität, bezogen auf die Fläche der positiven Elektrode ("flächenspezifische Kapazität"), sehr hoch. Die theoretische Kapazität von z.B. Lithiumeisenphosphat (LEP) beträgt 170 mAh/g. Bei der experimentellen Erprobung der erfindungsgemäßen Batteriezelle wurde festgestellt, dass dieser theoretische Wert in einer Li-SO$_2$-Zelle in sehr guter Näherung (mehr als 90 %) erreicht wird.

Die hohe Beladung der positiven Elektrode und die damit verbundene hohe flächenspezifische Kapazität ermöglichen es, Zellen herzustellen, die bei hoher Gesamtkapazität eine relativ geringe Elektrodenfläche haben. Ist die Beladung einer positiven Elektrode mit LEP als aktivem Material z.B. ca. 100 mg/cm$^2$, ist für eine Kapazität von 1 Ah nur noch eine Fläche von 60 cm$^2$ erforderlich. Die benötigte Elektrodenfläche ist um einen Faktor 3 kleiner als für Lithium-Ionen-Zellen mit organischem Elektrolyt. Dort beschriebene konventionelle LEP-Elektroden haben eine Dicke von 50 bis 90 μm und eine Flächenbeladung von 4 bis 6 mAh/cm$^2$. Demzufolge benötigen sie für die Bereitstellung einer Kapazität von 1 Ah eine Gesamtelektrodenfläche von 170 bis 250 cm$^2$.

Durch die verringerte Fläche der positiven Elektrode wird auch weniger Fläche an Separator und an negativer Elektrode benötigt. Außerdem ist, z.B. bei prismatischen Zellen mit mehreren Elektroden, eine geringere Anzahl an Ableiterfahnen zur Verbindung mit den Zellpolen erforderlich und die Verschaltung der Elektroden im Gehäuse ist bei einer geringen Elektrodenzahl wesentlich einfacher.

Aktives Metall

Vorzugsweise ist die wiederaufladbare elektrochemische Batteriezelle eine Alkalimetallzelle, bei der das aktive Metall ein Alkalimetall ist. Das aktive Metall kann aber auch ein Erdalkalimetall oder ein Metall der Gruppe 12 des Periodensystems oder Aluminium sein. Als aktives Metall einer Batteriezelle bezeichnet man das Metall, dessen Ionen innerhalb des Elektrolyten beim Laden oder Entladen der Zelle zur negativen oder positiven Elektrode wandern und dort an elektrochemischen Prozessen teilnehmen, die direkt oder indirekt zur Abgabe von Elektronen in den externen Stromkreis oder zur Aufnahme von Elektronen aus dem externen Stromkreis führen. Bevorzugt ist das aktive Metall Lithium, Natrium, Calcium, Zink oder Aluminium, wobei Lithium besonders bevorzugt ist.

Lithiumzellen mit einem auf SO$_2$ basierenden Elektrolyten werden als Lithium-SO$_2$-Zellen bezeichnet. In diesem Dokument wird beispielhaft (aber ohne Beschränkung der Allgemeinheit) auf Lithium als aktives Metall Bezug genommen.

Negative Elektrode

Die negativen Elektroden sind Insertionselektroden. Sie bestehen also aus einem Elektrodenmaterial, in welches die Ionen des aktiven Metalls während des Ladens der Zelle eingelagert und während des Entladens der Zelle ausgelagert werden. Vorzugsweise enthalten sie als aktive Masse der negativen Elektrode Kohlenstoff, besonders bevorzugt enthalten sie Kohlenstoff der Modifikation Graphit.

Vorzugsweise ist das Ableitelement der negativen Elektrode, wie auch das Ableitelement der positiven Elektrode, in Form einer dreidimensionalen porösen Metallstruktur, insbesondere in Form eines Metallschaums, ausgebildet, wobei sich bevorzugt die poröse Metallstruktur im Wesentlichen über die gesamte Dicke der positiven Elektrode und/oder der negativen Elektrode erstreckt. Ableitelement und aktive Masse der negativen Elektroden bilden die negative Insertionselektrode.

Organische Polymerseparatorschicht

Das organische Polymer auf dem die organische Polymerseparatorschicht basiert, kann z.B. ausgewählt werden aus der Gruppe bestehend aus:

- Polyolefinen (PP, PE) und deren high density (HD) Vertretern, z.B. PE-HD (HDPE) mit schwach verzweigten Polymerketten und daher einer hohen Dichte zwischen 0,94 g/cm$^3$ und 0,97 g/cm$^3$.
- Partiell bis vollständig halogensubstituierten Polyolefinen (z.B. partiell bis ganz fluorsubstituiert; z.B. PVDF, ETFE, PTFE).

- Polyestern
- Polyamiden
- Polysulfonen

Polyolefine ist ein Sammelbegriff für aus Alkenen wie z.B. Ethylen, Propylen, 1-Buten oder Isobuten, durch Polymerisation hergestellte Polymere, wie zum Beispiel Polyethylen und Polypropylen. Bei Polyolefinen handelt sich um gesättigte Kohlenwasserstoffe.

Partiell bis vollständig halogensubstituierte Polyolefinen sind Polyolefine, bei denen Wasserstoffatome partiell oder vollständig mit Halogenatomen ersetzt sind. Bevorzugt werden Polyolefine partiell bis ganz fluorsubstituiert. Beispiele für fluorsubstituierte Polyolefine sind Polyvinylidenfluorid (PVDF), Ethylen-Tetrafluorethylen (ETFE) oder Polytetrafluorethylen (PTFE).

Alternativ und ebenfalls bevorzugt kann die Polymerseparatorschicht keine Fluorverbindungen umfassen. Sie ist bevorzugt also frei von Fluor.

Polyester sind Polymere mit Esterfunktionen -[-CO-O-]- in ihrer Hauptkette. Beispiele für Polyester sind Polycarbonate (PC) oder das Polyethylenterephthalat (PET).

Polyamide (Kurzzeichen PA) sind lineare Polymere mit sich regelmäßig wiederholenden Amidbindungen entlang der Hauptkette.

Polysulfone sind eine Klasse thermoplastischer Hochleistungskunststoffe. Sie enthalten eine aryl-$SO_2$-aryl-Untereinheit. Beispiele für Polysulfone sind Polysulfon (PSU), Polyethersulfon (PES) und Polyphenylensulfon (PPSU).

Bevorzugt ist die organische Polymerseparatorschicht ein Polyolefin, weiter bevorzugt ein Polypropylen.

Die Dicke der organischen Polymerseparatorschicht sollte vorzugsweise höchstens 0,2 mm betragen. Besonders bevorzugt sind aber geringere Dicken wie höchstens 0,15 mm, weiter bevorzugt höchstens 0,1 mm, weiter bevorzugt höchstens 0,09 mm, weiter bevorzugt höchstens 0,08 mm, weiter bevorzugt höchstens 0,07 mm, weiter bevorzugt höchstens 0,06 mm, weiter bevorzugt höchstens 0,05 mm, weiter bevorzugt höchstens 0,04 mm, weiter bevorzugt höchstens 0,03 mm und sehr bevorzugt höchstens 0,02 mm.

Sowohl das Gewicht bzw. der Volumenbedarf wie auch die mechanische Stabilität der organischen Polymerschicht sollten optimal sein. Je geringer die Dicke der organischen Polymerseparatorschicht desto geringer ist das Gewicht und der Volumenbedarf des Separators. Eine Steigerung der gravimetrischen und volumetrischen Energiedichte der Batteriezelle ist damit möglich. Gleichzeitig sollte die Polymerseparatorschicht eine an die verwendeten Elektroden bzw. an den Zellaufbau angepasste mechanische Stabilität besitzen.

Damit eine Benetzung und Durchdringung der organischen Polymermembran mit $SO_2$ basiertem Elektrolyt erfolgen kann, muss die Oberflächenenergie beider Stoffe ähnlich sein.

Die Oberflächenenergie $\gamma$ ist ein Maß für die Energie, die zum Aufbrechen der chemischen Bindungen notwendig ist, wenn eine neue Oberfläche einer Flüssigkeit oder eines Festkörpers erzeugt wird. Sie ist definiert als die Energie E, die zum Erzeugen der Oberfläche je Flächeneinheit A aufgewendet werden muss:

$$\gamma = E\,/A$$

Die SI-Einheit der Oberflächenenergie ist $J/m^2$. Die Oberflächenenergie kann auch in mN/m angegeben werden. Bei Flüssigkeiten ist die Oberflächenenergie gleich der Oberflächenspannung, die auch in dyne/cm angegeben werden kann.

Die organische Polymerseparatorschicht und der Elektrolyt weisen jeweils eine eigene Oberflächenenergie auf. Die Oberflächenenergie der Polymerseparatorschicht ist mindestens gleich groß wie die Oberflächenenergie des Elektrolyten, bevorzugt ist die Oberflächenenergie der Polymerseparatorschicht größer als die Oberflächenenergie des Elektrolyten. Weiter bevorzugt ist die Oberflächenenergie der Polymerseparatorschicht mindestens 5 mN/m größer, weiter bevorzugt mindestens 10 mN/m größer, weiter bevorzugt mindestens 15 mN/m größer, sehr bevorzugt mindestens 20 mN/m größer als die Oberflächenenergie des Elektrolyten.

Die Benetzung und Durchdringung des organischen Polymerseparators mit auf $SO_2$ basierender Elektrolytlösung ist erst möglich, wenn die Oberflächenenergien ähnlich sind. Die Benetzung und Durchdringung werden schneller und vollständiger, wenn die Oberflächenenergie des Separators größer ist als die Oberflächenenergie der Elektrolytlösung. Beispielsweise haben Elektrolytlösungen ohne Additive der Zusammensetzung $LiAlCl_4$ *x $SO_2$, abhängig vom $SO_2$-Gehalt x, bei Raumtemperatur eine Oberflächenspannung von 40 - 45 dyne/cm. Die Oberflächenenergie des Polymerseparators muss also mindestens diesen Wert betragen oder bevorzugt größer sein.

Die Abstimmung der Oberflächenenergie der Polymerseparatorschicht und der Oberflächenenergie des Elektrolyten kann dadurch erfolgen, dass der Elektrolyt und/oder die Polymerseparatorschicht funktionale Moleküle enthalten, die die jeweilige Oberflächenenergie beeinflussen.

Die organische Polymerseparatorschicht kann eine organische Polymermembran sein. Diese mikroporöse Membran kann in sehr geringen Dicken, z.B. in Dicken von 0,02mm, hergestellt werden. In Kombination mit einer positiven Elektrode mit einer hohen Beladung an aktivem Material, z.B. einer Beladung von 100 mg/cm², können aufgrund des geringen Gewichts und des geringen Volumenbedarfs des Separators hohe gravimetrische und volumetrische Energiedichten erreicht werden.

Zusätzlich haben diese Membranen die Eigenschaft bei erhöhten Temperaturen in den Schmelzbereich zu kommen. Bei diesen Temperaturen schließen sich die Poren. Ein Ionentransport ist damit nicht mehr möglich. Dies ist gewünscht, da bei erhöhten Temperaturen sicherheitskritische Zustände auftreten. Durch den sogenannten "shut down" Mechanismus wird der Stromtransport innerhalb der Zelle unterbrochen und eine weitere Erwärmung damit verhindert.

Wenn die Polymerseparatorschicht eine organische Polymermembran ist, umfasst der Separator in einer bevorzugten Ausführungsform zusätzlich zu der organischen Polymermembran mindestens eine Vliesschicht, wobei die organische Polymermembran eine erste und eine zweite Oberfläche hat, die Vliesschicht eine erste und zweite Vliesschichtoberfläche hat. Eine der Oberflächen der organischen Polymermembran kontaktiert eine der Vliesschichtoberflächen, wobei bevorzugt die Vliesschicht ein Polymer ist, weiter bevorzugt ein Polyolefin und sehr bevorzugt Polypropylen ist.

Der Separator kann also aus einem Composite Material bestehen, wobei die organische Polymermembran und die Vliesschicht derart fest miteinander verbunden sind, dass ihre kontaktierenden Oberflächen unlösbar verbunden sind.

In einer bevorzugten Ausführungsform ist die Dicke der Vliesschicht zwischen der ersten und zweiten Vliesschichtoberfläche größer ist als die Dicke der organischen Polymermembran zwischen der ersten und zweiten Oberfläche, bevorzugt wenigstens doppelt so groß, besonders bevorzugt wenigstens dreimal so groß, besonders bevorzugt wenigstens viermal so groß, sehr bevorzugt wenigstens fünfmal so groß.

Wenn die Polymerseparatorschicht eine organische Polymermembran ist, umfasst der Separator in einer weiteren bevorzugten Ausführungsform zusätzlich zu der organischen Polymermembran mindestens eine Schicht, die ein anorganisches Material enthält, wobei die organische Polymermembran eine erste und eine zweite Oberfläche hat, die Schicht, die ein anorganisches Material enthält, eine erste und zweite Schichtoberfläche hat, und eine der Oberflächen der organischen Polymermembran eine der Schichtoberflächen der Schicht, die ein anorganisches Material enthält, kontaktiert.

Das anorganische Material, welches die Schicht enthält, ist vorzugsweise ein keramisches Material wie z.B. Aluminiumoxid, Siliziumoxid oder Titandioxid. Zusätzlich zu dem anorganischen Material kann die Schicht noch Bindemittel, auch auf organischer Basis, enthalten, z.B. PDVF, PTFE oder THV.

Auch diese Ausführungsform kann ein Composite Material sein, wobei die organische Polymermembran und die Schicht, die ein anorganisches Material enthält, derart fest miteinander verbunden sind, dass ihre kontaktierenden Oberflächen unlösbar verbunden sind.

Die Kombination aus organischer Polymerseparatormembran und einer Schicht, die ein anorganisches Material enthält, zeichnet sich durch eine gute Benetzbarkeit mit auf $SO_2$ basierender Elektrolytlösung aus.

Möglich sind auch jegliche Kombinationen aus organischer Polymermembran, Vliesschicht und der Schicht, die ein anorganisches Material enthält. So können Separatoren mit mehrschichtige Aufbauten entstehen.

Die organische Polymerseparatorschicht kann ein organisches Polymervlies sein. Polymervliese sind nicht gewebte (non woven) Polymermaterialien mit einer linearen Porenstruktur. Die Polymervliese können vor der Verarbeitung in der Dicke z.B. durch Pressen reduziert werden.

Ein Vorteil von Polymervliesen ist die leichte Benetzbarkeit mit $SO_2$ basiertem Elektrolyt. Aufgrund der linearen Porenstruktur dringt der Elektrolyt besser in das Vlies ein als in andere Strukturen des Polymers. Ein weiter Vorteil von Polymervliesen ist deren niedriger Preis im Vergleich zu Polymermembranen.

Das Polymervlies enthält vorzugsweise ein keramisches Material wie z.B. Aluminiumoxid, Siliziumoxid oder Titandioxid. Zusätzlich zu dem anorganischen Material kann das Polymervlies noch Bindemittel, auch auf organischer Basis, enthalten, z.B. PDVF, PTFE oder THV. Sowohl das keramische Material, wie auch das Bindemittel können als Schicht auf der Oberfläche vorhanden und/oder in der porösen Schichtstruktur des Polymervlieses eingebracht sein.

In einer bevorzugten Ausführungsform ist mindestens eine der Elektroden von einer Umhüllung aus der organischen Polymerseparatorschicht umhüllt. Dabei ist die Flächenausdehnung der Umhüllung aus der organischen Polymerseparatorschicht größer als die Flächenausdehnung der Elektrode, so dass sich die organische Polymerseparatorschicht über die Begrenzung der Elektrode hinaus erstreckt. Zwei die Elektrode beidseitig bedeckende Schichten der organischen Polymerseparatorschicht sind am Rand der Elektrode durch eine Randverbindung miteinander verbunden. Mögliche Randverbindungen sind z.B. Schweißen, Kleben oder Schmelzen.

Elektrolyt

Erfindungsgemäß wird ein Elektrolyt verwendet, der $SO_2$ enthält, vorzugsweise ein auf $SO_2$ basierender Elek-

trolyt (SO$_2$ based electrolyte). Mit diesem Begriff wird im Rahmen der Erfindung ein Elektrolyt bezeichnet, der Schwefeldioxid nicht als Zusatz in geringer Konzentration enthält, sondern bei dem die Beweglichkeit der Ionen des Leitsalzes, das in dem Elektrolyten enthalten ist und den Ladungstransport bewirkt, zumindest teilweise durch das SO$_2$ gewährleistet ist. SO$_2$ ist das Lösungsmittel für das Leitsalz.

Bevorzugt enthält der Elektrolyt mindestens 20 Gewichtsprozent ("Gew%") SO$_2$, wobei Werte von 35 Gew% SO$_2$, 45 Gew% SO$_2$, 55 Gew% SO$_2$ und 65 Gew% SO$_2$, jeweils bezogen auf die Gesamtmenge des in der Zelle enthaltenen Elektrolyten, in dieser Reihenfolge weiter bevorzugt sind. Der Elektrolyt kann auch bis zu 95 Gew% SO$_2$, enthalten, wobei Maximalwerte von 75 Gew% SO$_2$, 85 Gew% SO$_2$ und 90 Gew% SO$_2$ in dieser Reihenfolge bevorzugt sind.

Der Elektrolyt enthält eine im Vergleich zu der Menge des Leitsalzes relativ hohe Konzentration an SO$_2$, wobei Mindestwerte von 1,5 Mol SO$_2$, 2 Mol SO$_2$, 2,5 Mol SO$_2$, 3 Mol SO$_2$, 4 Mol SO$_2$, 4,5 Mol SO$_2$, 5 Mol SO$_2$ und 6 Mol SO$_2$ je Mol Leitsalz in dieser Reihenfolge besonders bevorzugt sind.

Der Gehalt des Leitsalzes im Elektrolyt ist bevorzugt kleiner als 70 Gew% des Gewichts des Elektrolyts weiter bevorzugt kleiner als 60 Gew%, kleiner als 50 Gew%, kleiner als 40 Gew%, kleiner als 30 Gew%, kleiner als 20 Gew% oder kleiner als 10 Gew%.

Ein Elektrolyt mit einer relativ geringen Konzentration an Leitsalz und der damit verbundenen hohen Konzentration an SO$_2$ ist trotz des damit verbundenen höheren Dampfdrucks vorteilhaft, insbesondere hinsichtlich der Stabilität über viele Lade- und Entlade-Zyklen.

Bevorzugt beträgt die Konzentration an SO$_2$ höchstens 220 Mol SO$_2$ je Mol Leitsalz, bevorzugt höchstens 200 Mol SO$_2$, weiter bevorzugt höchstens 100 Mol SO$_2$, weiter bevorzugt höchstens 50 Mol SO$_2$, weiter bevorzugt höchstens 30 Mol SO$_2$, weiter bevorzugt höchstens 25 Mol SO$_2$ und besonders bevorzugt höchstens 20 Mol SO$_2$ jeweils je Mol Leitsalz. Bei der Wahl der Konzentration an SO$_2$ sollte auch die Leitfähigkeit der jeweiligen Elektrolytlösung beachtet werden. Je geringer die in diesem Abschnitt beschriebenen Konzentration an SO$_2$ ist, desto höher ist die Leitfähigkeit.

Der Gesamtgehalt von SO$_2$ und Leitsalz ist bevorzugt größer als 50 Gew% des Gewichts des Elektrolyts, weiter bevorzugt größer als 60 Gew%, größer als 70 Gew%, größer als 80 Gew%, größer als 85 Gew%, größer als 90 Gew%, größer als 95 Gew% oder größer als 99 Gew%.

Vorzugsweise weist der Elektrolyt nur kleinere oder geringe Anteile von organischem Material auf, wobei der Anteil von organischem Material im Elektrolyten, das beispielsweise in Form eines oder mehrerer Lösungsmittel oder Zusatzstoffe (co-solvent) vorhanden ist, höchstens 50 Gewichtsprozent (Gew%) des Gewichts des Elektrolyten beträgt. Bevorzugt sind geringere Anteile von höchstens 40 Gew%, von höchstens 30 Gew%, von höchstens 20 Gew%, von höchstens 15 Gew%, von höchstens 10 Gew%, von höchstens 5 Gew%, von höchstens 1 Gew% des Gewichts des Elektrolyten. Weiter bevorzugt ist der Elektrolyt frei von organischen Lösungsmitteln.

Organische Lösungsmittel sind brennbar und deshalb oft ein Sicherheitsrisiko für eine Batteriezelle. Je geringer der Gehalt an organischen Lösungsmittel desto geringer ist die Gefahr eines Brandes.

Gemäß einer weiteren bevorzugten Ausführungsform hat das organische Material einen Flammpunkt (flash point) von weniger als 200° C, wobei Werte von 150, 100, 50, 25 und 10° C in dieser Reihenfolge weiter bevorzugt sind.

Gemäß einer weiteren bevorzugten Ausführungsform enthält der Elektrolyt zwei oder mehr organische Materialien, wobei die organischen Materialien bevorzugt insgesamt einen durchschnittlichen (aus der Gewichtsrelation errechneten) Flammpunkt von weniger als 200° C haben, wobei Werte von 150, 100, 50, 25 und 10° C in dieser Reihenfolge weiter bevorzugt sind.

Besonders bevorzugt ist der Elektrolyt im Wesentlichen frei von organischen Materialien, wobei "im Wesentlichen" dahingehend zu verstehen ist, dass die Menge eventuell vorhandener organischer Materialien so gering ist, dass sie keinerlei Sicherheitsrisiko darstellen. Bevorzugt ist das organische Material kein Additiv, sondern lediglich eine Verunreinigung, beispielsweise durch einen Kohlenstoffüberzug des aktiven Materials der positiven Elektrode oder von anderen kohlenstoffhaltigen Materialien, beispielsweise der negativen Elektrode. Bevorzugt enthält der Elektrolyt nicht mehr als 500 ppm an organischem Material.

Die elektrochemische Ladungsmenge des in der Zelle enthaltenen SO$_2$ (Schwefeldioxid), berechnet mit einem Faraday pro Mol SO$_2$ (Schwefeldioxid), ist bevorzugt größer als die elektrochemisch theoretisch in der positiven Elektrode speicherbare Ladungsmenge des aktiven Metalls.

Im Falle einer Alkalimetallzelle wird als Leitsalz vorzugsweise ein Tetrahalogenoaluminat, besonders bevorzugt ein Tetrachloroaluminat des Alkalimetalls, beispielsweise LiAlCl$_4$, verwendet. Weitere bevorzugte Leitsalze sind Aluminate, Halogenide, Oxalate, Borate, Phosphate, Arsenate und Gallate eines Alkalimetalls, insbesondere von Lithium.

Die Erfindung wird nachfolgend anhand der Figuren näher erläutert. Die dargestellten und beschriebenen Besonderheiten können einzeln oder in Kombination verwendet werden, um bevorzugte Ausgestaltungen der Erfindung zu schaffen. Es zeigen:

Figur 1    eine Querschnittsdarstellung einer erfindungsgemäßen Batteriezelle;

Figur 2    eine perspektivische Darstellung von einer positiven und zwei negativen Elektroden eines Elektrodenstapels

Figur 3     die Abhängigkeit der Entladekapazität und des elektrischen Widerstands von der Zykelzahl von Versuchszellen A1 und B1;

Figur 4a     die Abhängigkeit der Entladekapazität und des elektrischen Widerstands von der Zykelzahl der von Versuchszellen A2 und B1;

Figur 4b     die Abhängigkeit der Spannung von der Kapazität der negativen Elektrode der Versuchszellen A2 und B1;

Figur 5     die Abhängigkeit der Entladekapazität und des elektrischen Widerstands von der Zykelzahl von Versuchszellen A3 und B1;

Figur 6     die Abhängigkeit der Entladekapazität und des elektrischen Widerstands von der Zykelzahl von Versuchszellen A4 und B1;

Figur 7     die Abhängigkeit des elektrischen Widerstands von der Zykelzahl der Versuchszellen A1 - A5;

Die genaue Beschreibung der Versuchszellen A1 bis A5 und B1 (Referenzzelle) kann der Tabelle 1 entnommen werden.

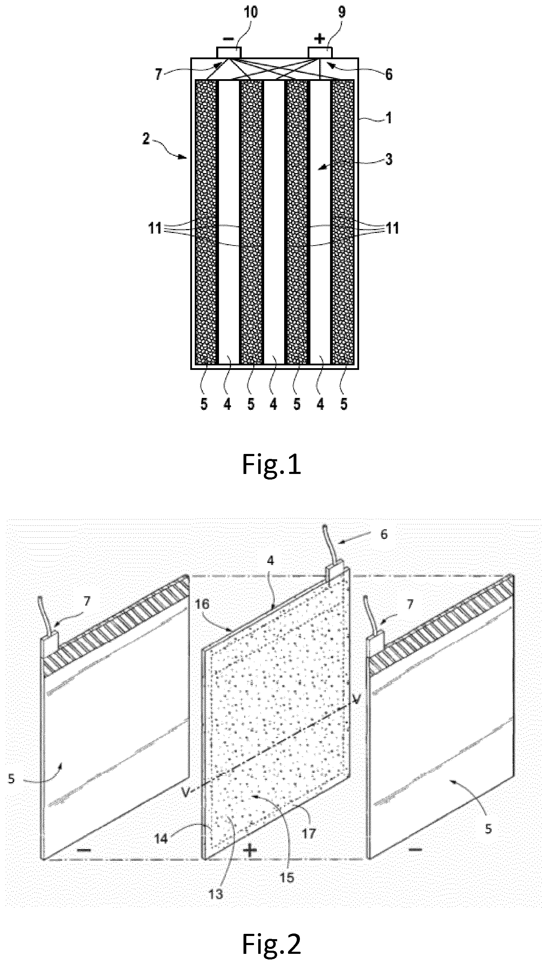

Das Gehäuse 1 der in Figur 1 dargestellten wiederaufladbaren Batteriezelle 2 umschließt eine Elektrodenanordnung, die mehrere (im dargestellten Fall drei) positive Elektroden 4 und mehrere (im dargestellten Fall vier) negative Elektroden 5 einschließt. Die Elektroden sind jeweils durch Separatoren 11 voneinander getrennt. Die Elektroden 4, 5 sind, wie üblich, über Elektrodenanschlüsse 6, 7 mit entsprechenden Anschlusskontakten 9, 10 der Batterie verbunden. Die Zelle ist derartig mit einem in der Zeichnung nicht dargestelltem auf $SO_2$ basierenden Elektrolyten gefüllt, dass der Elektrolyt möglichst vollständig in sämtliche Poren, insbesondere innerhalb der Elektroden 4, 5, und innerhalb der Separatoren 11 eindringt. Der Elektrolyt kann flüssig oder gelförmig sein.

Die Elektroden 4, 5 sind in üblicher Weise flächig ausgebildet, d.h. als Schichten mit einem im Verhältnis zu ihrer Flächenausdehnung geringen Dicke. Die Elektroden 4, 5 weisen, wie üblich, ein Ableitelement auf, das aus Metall besteht und dazu dient, den erforderlichen elektronisch leitenden Anschluss des aktiven Materials der jeweiligen Elektrode zu ermöglichen. Das Ableitelement steht in Kontakt zu dem an der Elektrodenreaktion der jeweiligen Elektrode beteiligten aktiven Material. Das Gehäuse 1 der dargestellten prismatischen Zelle ist im Wesentlichen quaderförmig, wobei sich die Elektroden und die im Querschnitt der Figur 1 dargestellten Wände senkrecht zu der Zeichenebene erstrecken und im Wesentlichen gerade und eben verlaufen. Die erfindungsgemäße Zelle kann jedoch auch als Wickelzelle ausgebildet sein.

Die positiven und negativen Elektroden 4 und 5 sind Insertionselektroden. Sie bestehen aus einem Elektrodenmaterial, in welches die Ionen des aktiven Metalls während des Ladens der Zelle eingelagert und während des Entladens der Zelle ausgelagert werden.

In Fig. 2 sind zwei negative Elektroden 5 und eine positive Elektrode 4 dargestellt. Jede der Elektroden hat einen Anschlussdraht 6 bzw. 7 zum Anschluss an die entsprechenden elektrischen Anschlusskontakte 9 bzw. 10 der Zelle.

Bei der dargestellten bevorzugten Ausführungsform ist die positive Elektrode 4 (vorzugsweise alle positiven Elektroden der Zelle) von einer Umhüllung 13 aus einer organischen Polymerseparatorschicht (Polymerseparator-Beutel) umhüllt. Dabei ist die Flächenausdehnung der Umhüllung größer als die Flächenausdehnung der Elektrode, deren Begrenzung 14 in Fig. 2 als gestrichelte Linie eingezeichnet ist. Zwei die Elektrode beidseitig bedeckende Schichten 15 und 16 der organischen Polymerseparatorschicht sind am Rand der Elektrode 11 durch eine Randverbindung 17 miteinander verbunden. Die Randverbindung 17 erstreckt sich vorzugsweise längs mindestens zwei, weiter bevorzugt drei, der vier Kanten des Polymerseparator-Beutels 13 bzw. der darin befindlichen Elektrode 4, nämlich deren Unterkante und deren nach oben verlaufenden Seitenkanten. Bevorzugt ist die Randverbindung an den Kanten, an denen sie vorhanden ist, ununterbrochen, etwa durchgängig. Je nach Anwendungsfall kann sie jedoch auch unterbrochen sein. Die Randverbindung kann durch ein Verschweißen oder Verschmelzen der zwei die Elektrode beidseitig bedeckenden Schichten 15 und 16 der organischen Polymerseparatorschicht erfolgen. Möglich wäre auch das Aufbringen geeigneter Klebermaterialien in fester oder flüssiger Form.

Die Elektroden 4, 5 sind in dem Elektrodenstapel alternierend angeordnet. Generell ist es bevorzugt, wenn die Anzahl der nicht umhüllten Elektroden (vorzugsweise der negativen Elektroden) um Eins größer als die Anzahl der Elektroden mit einem Polymerseparator-Beutel (vorzugsweise der positiven Elektroden) ist. Dies hat zur Folge, dass die äußeren Stirnflächen des Elektrodenstapels von den nicht umhüllten Elektrodenoberflächen (vorzugsweise der negativen Elektroden) gebildet werden.

Experimente

Alle Experimente wurden in Batteriezellen durchgeführt, die aus 12 negativen Elektroden mit einem Aktivmaterial aus Kohlenstoff, einem auf $6xSO_2$ (Zellen A1, A2, A4 und A5) oder einem auf $4,5 \, SO_2$ (Zelle A3) basierenden Elektrolyten mit $LiAlCl_4$ als Leitsalz ($LiAlCl_4$ x 6 $SO_2$, bzw. $LiAlCl_4$ x 4,5 $SO_2$) und aus 11 positiven Elektroden mit Lithiumeisenphosphat (LEP) als aktivem Material aufgebaut waren.

Die positiven Elektroden hatten eine Beladung mit aktivem Material, also mit LEP, von ca. 100 mg/cm$^2$. Die Nennkapazität der Zellen betrug ca. 1000 mAh.

Die Zellen unterschieden sich jeweils in der Art des verwendeten Separators. Zellen mit einem organischen Polymerseparator werden mit dem Buchstaben A und einer dazugehörigen Zahl beschrieben. Referenzzellen sind mit B1 bezeichnet.

Tabelle 1: Beschreibung der Versuchszellen

| Versuchs-zelle | | Referenz-zelle | |
|---|---|---|---|
| A1 | Zelle mit Polypropylenmembran-Separator, 25 μm, ohne Vorbehandlung | B1 | Zelle mit Glasgewebeseparator, 120 μm |
| A2 | Zelle mit Polypropylenmembran-Separator, 25 μm, vor dem Betrieb gekühlt | B1 | Zelle mit Glasgewebeseparator, 120 μm |
| A3 | Zelle mit Polypropylenvlies-Separator, 75 μm, Vlies kalandert | B1 | Zelle mit Glasgewebeseparator, 120 μm |
| A4 | Zelle mit Polypropylenmembran-Separator, 25 μm, Separator mit Plasma behandelt | B1 | Zelle mit Glasgewebeseparator, 120 μm |
| A5 | Zelle mit Polypropylenmembran-Separator, 25 μm, Separator mit Tensid beschichtet | | |

Es wurden mehrere Zykelexperimente durchgeführt. Dabei erfolgte das Laden der Zellen mit 1 C, entsprechend einem Strom von 1A bis zu einer Ladeschlussspannung von 3,6 Volt und einem Abfall des Ladestromes auf 200 mA. Danach wurden die Zellen mit der gleichen Stromstärke bis zum Erreichen eines Potentials von 2,5 V entladen. Zwischen dem Laden und dem Entladen wurde jeweils eine Pause von zehn Minuten eingelegt.

Die erhaltenen Entladekapazitäten $Q_D$ werden in % der Nennkapazität $Q_N$ ausgedrückt. Die Nennkapazität $Q_N$ wird erhalten, indem von der theoretischen Kapazität $Q_{th}$ der positiven Elektrode die Kapazität subtrahiert wird, die in den ersten Zyklen für die Deckschichtbildung auf der negativen Elektrode verbraucht wird.

In jeder Messung wurden zwei Arten von Zellen untersucht, die sich im verwendeten Separator unterschieden. Die gezeigten Kurven sind jeweils der Mittelwert aus vier identischen Messungen.

Experiment 1

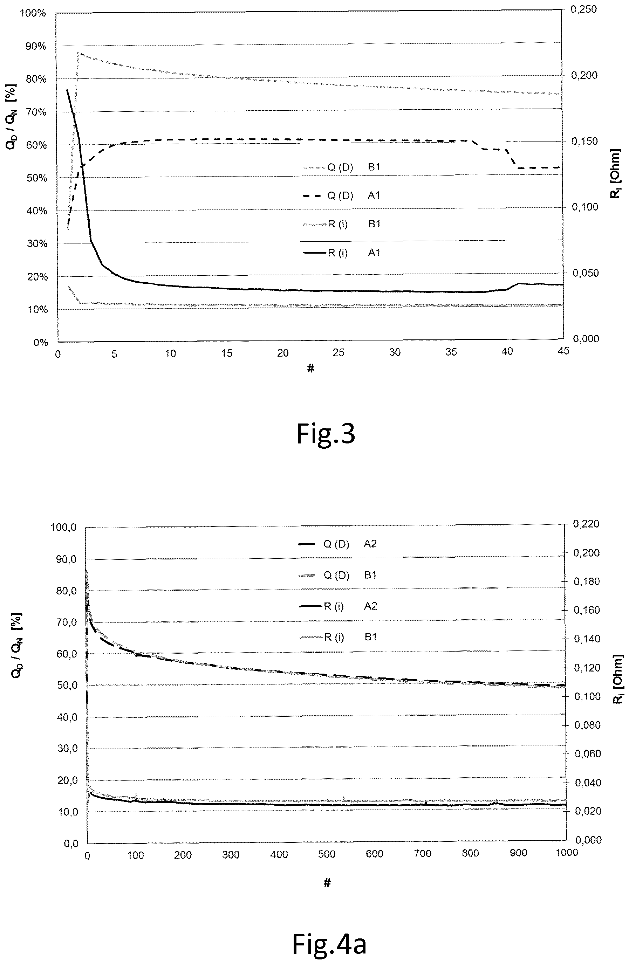

Die Figur 3 zeigt die Ergebnisse des Experiments 1, in dem Zellen (B1) mit einem Separator aus Glasfasergewebe (GG) (Stand der Technik) mit Zellen (A1), die einen Polymermembranseparator aus Polypropylen (PP) enthielten, verglichen werden. Der handelsübliche Separator aus PP wurde eingesetzt wie geliefert. Die Zellen mit PP-Separator wurden nach dem Befüllen mit Elektrolyt keiner weiteren Behandlung unterzogen.

Die Zellen wurden über mehrere Zyklen wie oben beschrieben geladen und entladen. Fig. 3 zeigt die Entladekapazität $Q_D$ in % der Nennkapazität $Q_N$ und den Innenwiderstand $R_i$ für beide Zellen aufgetragen über die Zykelanzahl # (Lade-/Entladezyklen).

Die Nennkapazität $Q_N$ der Zellen B1 mit GG-Separator verläuft von anfänglich ca. 87% auf einen Wert von ca. 75% im 45. Zyklus.

Die Zellen A1 mit PP-Separator erreichen nur ca. 60% der Nennkapazität $Q_N$ und fallen in den Endzyklen auf ca. 50% ab.

Der Widerstand der Zelle B1 mit GG-Separator liegt nach einem ersten Wert von 0,04 Ohm konstant bei ca. 0,025 Ohm. Die Vergleichszelle A1 mit PP-Separator hat einen wesentlich höheren Innenwiderstand $R_i$. Die Werte ($R_i$) sind zu Beginn fast zehn Mal höher und liegen bei 0,19 Ohm. Erst nach zehn Zyklen stellt sich ein linearer Verlauf beginnend bei ca. 0,04 Ohm ein, der bis zum 38. Zyklus auf 0,035 Ohm abfällt, danach aber wieder unregelmäßig auf 0,04 Ohm steigt.

Diese Ergebnisse spiegeln die schlechte Kompatibilität von Polymermembran-Separatoren mit einer auf SO$_2$-basierenden Elektrolytlösung wider. So ist wahrscheinlich die Benetzung des Separators mit auf SO$_2$-basierenden

Elektrolytlösung schlecht, so dass auch die Durchdringung des Separators und die Befüllung der Poren der porösen negativen und positiven Elektroden mit Elektrolyt gehemmt werden. Es resultieren hohe Innenwiderstände Ri. Der Ionentransport ist gehemmt, die Entladekapazität $Q_D$ ist sehr niedrig.

Im Rahmen der Erfindung wurde jedoch überraschend festgestellt, dass bei entsprechender Behandlung der Polymerseparatoren (wie oben beschrieben) die negativen Eigenschaften eines Polymerseparators überwunden werden können und diese Separatoren vorteilhaft in Kombination mit positiven Elektroden mit hoher Beladung an Aktivmaterial in einer Zelle mit auf $SO_2$-basierendem Elektrolyt eingesetzt werden können.

Experiment 2

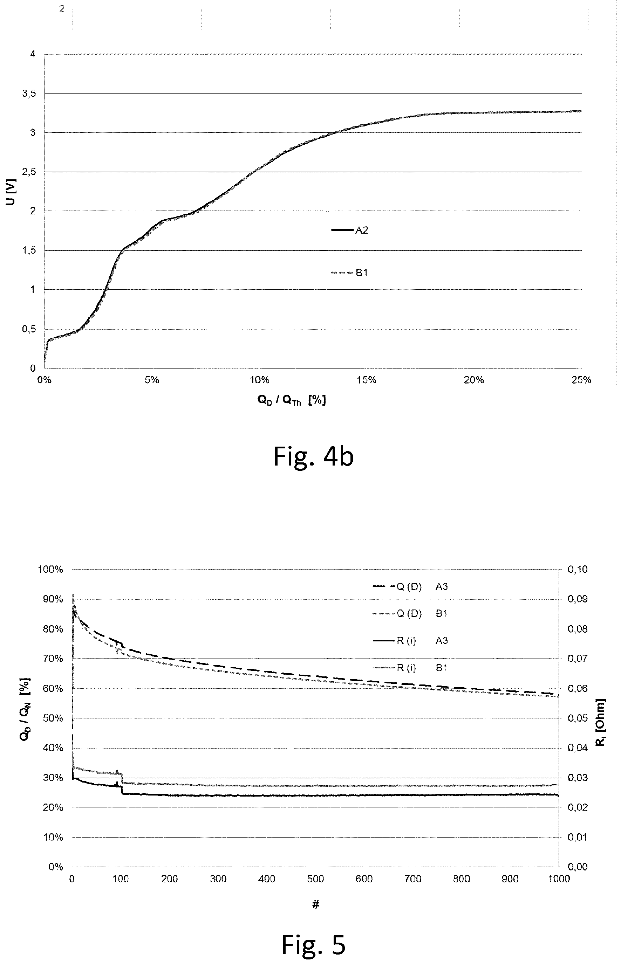

Die Figuren 4a und 4b zeigen die Ergebnisse eines weiteren Experiments, bei dem Referenzzellen B1 identisch denen des Experiments 1 eingesetzt wurden. Im Unterschied zu dem Experiment 1 wurden die Zellen A2 mit Polymerseparator nach der Befüllung mit Elektrolyt bei -25°C für ca. 4 Stunden gelagert.

Fig. 4a zeigt die Entladekapazität $Q_D$ in % der Nennkapazität $Q_N$ und den Innenwiderstand $R_i$ für beide Zellen A2, B1, aufgetragen über die Zykelanzahl (Lade/Entladezyklen).

Der Kapazitätsverlauf der beiden Zellen A2 und B1 ist nahezu identisch. Von anfänglich ca. 80% der Nennkapazität $Q_N$ fällt die Entladekapazität $Q_D$ auf einen Wert von ca. 48% im 1000. Zyklus.

Die Zelle A2 mit Polymerseparator zeigt ein exzellentes Langzeitverhalten. Es werden 1000 Zyklen ohne außerordentlichen Kapazitätsabfall erreicht.

Der Widerstand $R_i$ der Zelle B1 mit GG-Separator liegt nach einem ersten Wert von 0,027 Ohm konstant bei ca. 0,022 Ohm. Die Vergleichszelle A2 mit PP-Separator hat überraschend einen geringeren Innenwiderstand $R_i$. Die Werte $R_i$ liegen zu Beginn liegen bei 0,024 Ohm. Danach stellt sich ein linearer (konstanter) Verlauf bei ca. 0,018 Ohm ein.

Beim ersten Laden der beschriebenen Lithium-Ionen-Batteriezelle A2 wird auf der negativen Elektrode eine Deckschicht gebildet. Für die Deckschichtbildung werden Lithiumionen verbraucht, die dann der Zelle A2 nicht mehr als Kapazität im weiteren Betrieb zur Verfügung stehen.

Figur 4b zeigt den ersten Ladezyklus einer Batteriezelle. Aufgetragen ist der Spannungsverlauf U [V] der beiden Batteriezellen A2 und B1 in Abhängigkeit der Kapazität Q in % bezogen auf die theoretische Kapazität $Q_{th}$ der negativen Elektrode. Die Interkalation von Lithiumionen beginnt bei ca. 3,2 Volt, zuvor werden die Lithiumionen zur Bildung der Deckschicht verbraucht.

Im dargestellten Fall liegt die Deckschichtkapazität bei ca. 16% der theoretischen Kapazität $Q_{th}$ der negativen Elektrode. Es besteht kein Unterschied zwischen den Zellen B1 mit GG-Separator und den Zellen A2 mit PP-Separator.

Die erfindungsgemäße Batteriezelle A2 weist überraschender Weise eine Deckschichtkapazität auf, die vergleichbar ist mit einer Zelle B1, die einen Glasfaserseparator verwendet. Vom Fachmann war erwartet, dass, wenn sich organische Bestandteile in der Zelle A2 befinden, wie z.B. bei einem Polymerseparator, diese elektrochemisch reduziert werden und mit Lithiumionen zusätzliche Deckschichten bilden, so dass eine gegenüber dem Stand der Technik erhöhte Deckschichtkapazität resultiert.

Experimente 3 und 4

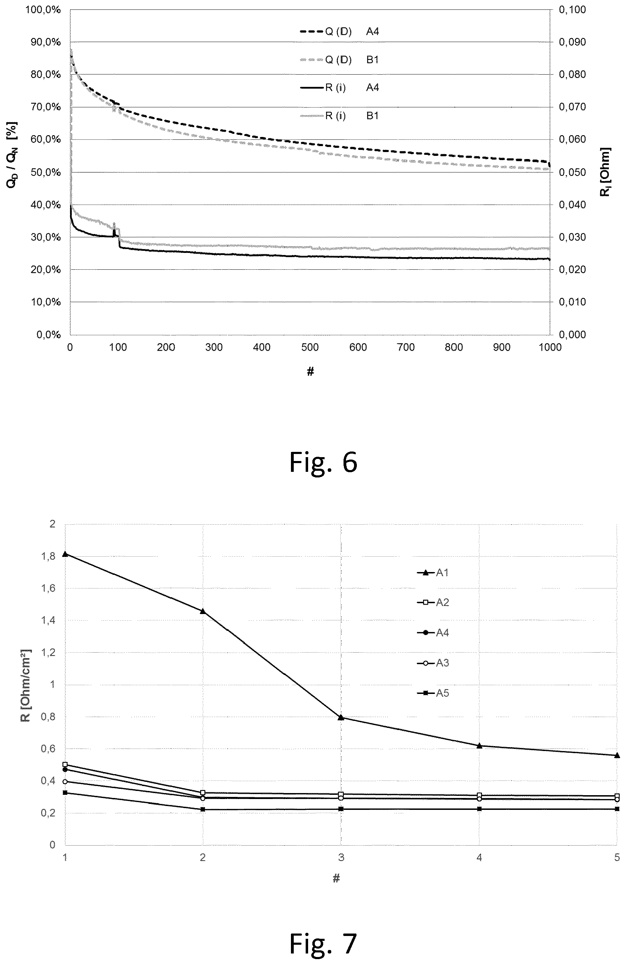

In diesen Experimenten wurden weitere Polymerseparatoren untersucht. Zellen mit einem Polymervliesseparator (A3; Figur 5) und Zellen mit einem Polymermembranseparator (A4, Figur 6), der zuvor mit Plasma behandelt wurde, wurden mit Referenzzellen B1 aus dem Stand der Technik, die Glasfaserseparatoren enthielten, verglichen.

Die Figuren 5 und 6 zeigen die Entladekapazität $Q_D$ in % der Nennkapazität $Q_N$ und den Innenwiderstand $R_i$ für die jeweiligen Zellen aufgetragen über die Zykelanzahl (Lade/Entladezyklen).

Bei beiden Messungen zeigt sich ein ähnliches Bild für die Versuchszellen A3 und A4 mit Polymerseparator. Die Entladekapazitäten $Q_D$ sind im Vergleich zu Zellen B1 des Stands der Technik höher. Gleichzeitig zeigen sich verringerte Widerstandswerte Ri. Diese Ergebnisse führen zu einer zum Stand der Technik verbesserten Batteriezelle.

Experiment 5

Figur 7 zeigt die Widerstandwerte $R_i$ der Zellen A1 - A5 in den ersten 5 Zyklen. Zum besseren Vergleich wurden die Widerstandwerte $R_i$ auf eine Elektrodenfläche von 1 $cm^2$ normiert. Deutlich ist zu erkennen, dass die Zelle A1, die einen handelsüblichen PP-Separator aufweist, einen im ersten Zyklus um den Faktor 4-5 höheren Widerstandswert $R_i$ aufweist. Auch in den folgenden Zyklen ist der Widerstand $R_i$ immer noch doppelt so hoch wie bei den anderen Zellen A2 - A5. Die Separatoren der Zellen A2 - A5 wurden auf verschiedenste Weise modifiziert. Tabelle 1 gibt einen Überblick. Alle Messkurven zeigen Widerstandwerte von im ersten Zyklus 0,3 - 0,6 Ohm/$cm^2$ bis 0,2 - 0,4 Ohm/$cm^2$ in den weiteren Zyklen.

Experiment 6

Es wird 1 cm² der Einheit Positive Elektrode/ Separator mit einer Elektrodendicke der positiven Elektrode von 600 μm und einer Beladung mit aktivem Material LiFePO$_4$ von 100 mg/cm² betrachtet. Für diese Einheit wurden die gravimetrischen und volumetrischen Energiedichten mit einer mittleren Entladespannung von 3,2 Volt berechnet, sowohl bei Verwendung eines Glasfasergewebeseparators mit einer Dicke von 120 μm als auch bei Verwendung einer erfindungsgemäßen organischen Polymermembran der Dicke 20 μm. Tabelle 2 gibt eine Übersicht der berechneten Werte.

Tabelle 2: Energiedichten

| Separator | Gravimetrische Energiedichte [Wh/kg] | Verbesserung zu der Zelle mit Glasfaser | Volumetrische Energiedichte [Wh/l] | Verbesserung zu der Zelle mit Glasfaser |
|---|---|---|---|---|
| Glasfasergewebe 120 μm; Stand der Technik | 332,8 | | 761,6 | |
| Organische Polymermembran 20 μm | 358,5 | +8% | 873,6 | +15% |

Die Verwendung einer organischen Polymermembran erhöht sich im betrachteten Fall die gravimetrische Energiedichte um 8% und die volumetrische Energiedichte sogar um 15%.

**Patentansprüche**

1. Wiederaufladbare Batteriezelle mit einer positiven Elektrode (4), einer negativen Elektrode (5), einem Elektrolyten, der ein Leitsalz umfasst und einem Separator (11), der zwischen der positiven Elektrode (4) und der negativen Elektrode (5) angeordnet ist,
   wobei

   - die negative Elektrode (5) eine Insertionselektrode ist,
   - die positive Elektrode (4) eine Insertionselektrode ist, und
   - der Elektrolyt auf SO$_2$ basiert, und
   - der Separator (11), eine Separatorschicht (15, 16) umfasst, die eine organische Polymerseparatorschicht ist, und
   - die Dicke der organischen Polymerseparatorschicht bezogen auf die flächenbezogene Beladung der positiven Insertionselektrode mit aktivem Material kleiner als 0,25 mm³/mg ist.

2. Batteriezelle nach Anspruch 1, **dadurch gekennzeichnet, dass** die Dicke der organischen Polymerseparatorschicht bezogen auf die flächenbezogene Beladung der positiven Insertionselektrode mit aktivem Material kleiner als 0,20 mm³/mg, bevorzugt kleiner als 0,15 mm³/mg, bevorzugt kleiner als 0,10 mm³/mg, besonders bevorzugt kleiner als 0,05 mm³/mg ist.

3. Batteriezelle nach einem der vorhergehenden Ansprüche, **dadurch gekennzeichnet, dass** die Beladung der positiven Insertionselektrode mit aktivem Material, bezogen auf ihre Fläche, mindestens 30 mg/cm², bevorzugt mindestens 40 mg/cm², weiter bevorzugt mindestens 60 mg/cm², weiter bevorzugt mindestens 80 mg/cm², weiter bevorzugt mindestens 100 mg/cm², weiter bevorzugt mindestens 120 mg/cm² und besonders bevorzugt mindestens 140 mg/cm² beträgt.

4. Batteriezelle nach einem der vorhergehenden Ansprüche, **dadurch gekennzeichnet, dass** die Dicke der organischen Polymerseparatorschicht, höchstens 0,2 mm, bevorzugt höchstens 0,15 mm, weiter bevorzugt höchstens 0,1 mm, weiter bevorzugt höchstens 0,09 mm, weiter bevorzugt höchstens 0,08 mm, weiter bevorzugt höchstens 0,07 mm, weiter bevorzugt höchstens 0,06 mm, weiter bevorzugt höchstens 0,05 mm, weiter bevorzugt höchstens 0,04 mm, weiter bevorzugt höchstens 0,03 mm und besonders bevorzugt höchstens 0,02 mm beträgt.

5. Batteriezelle nach einem der vorhergehenden Ansprüche, **dadurch gekennzeichnet, dass** die positive Elektrode (5) mindestens 0,25 mm, bevorzugt mindestens 0,3 mm, weiter bevorzugt mindestens 0,4 mm, weiter bevorzugt mindestens 0,5 mm und besonders bevorzugt mindestens 0,6 mm dick ist.

6. Batteriezelle nach einem der vorhergehenden Ansprüche, **dadurch gekennzeichnet, dass** die Polymerseparatorschicht aus einem Polyolefin, einem partiell bis vollständig halogensubstituierten Polyolefin, einem Polyester, einem Polyamid oder einem Polysulfon besteht, wobei Polyolefin bevorzugt und Polypropylen weiter bevorzugt ist.

7. Batteriezelle nach einem der vorhergehenden Ansprüche, **dadurch gekennzeichnet, dass** die Polymerseparatorschicht eine Oberflächenenergie aufweist und der Elektrolyt eine Oberflächenenergie aufweist, wobei die Oberflächenenergie der Polymerseparatorschicht größer oder gleich ist wie die Oberflächenenergie des Elektrolyten, bevorzugt die Oberflächenenergie der Polymerseparatorschicht mindestens gleich groß ist wie die Oberflächenenergie des Elektrolyten, weiter bevorzugt mindestens 5 mN/m größer, weiter bevorzugt mindestens 10 mN/m größer, weiter bevorzugt mindestens 15 mN/m größer, sehr bevorzugt mindestens 20 mN/m größer ist als die Oberflächenenergie des Elektrolyten.

8. Batteriezelle nach Anspruch 7, **dadurch gekennzeichnet, dass** die Abstimmung der Oberflächenenergie der Polymerseparatorschicht und der Oberflächenenergie des Elektrolyten dadurch erfolgt, dass die Polymerseparatorschicht funktionale Moleküle enthält, die die Oberflächenenergie der Polymerseparatorschicht beeinflussen.

9. Batteriezelle nach einem der vorhergehenden Ansprüche, **dadurch gekennzeichnet, dass** die Polymerseparatorschicht keine Fluorverbindungen umfasst.

10. Batteriezelle nach einem der vorhergehenden Ansprüche, **dadurch gekennzeichnet, dass** die Polymerseparatorschicht eine organische Polymermembran ist, wobei bevorzugt der Separator (11) zusätzlich zu der organischen Polymermembran mindestens eine andere Schicht umfasst, wobei

  - die organische Polymermembran eine erste und eine zweite Oberfläche hat,
  - die andere Schicht eine erste und zweite Schichtoberfläche hat,
  - eine der Oberflächen der organischen Polymermembran eine der anderen Schichtoberflächen kontaktiert,
  - wobei bevorzugt die andere Schicht

    eine polymere Vliesschicht ist, die bevorzugt aus Polyolefin und sehr bevorzugt aus Polypropylen besteht und/ oder
    eine Schicht, die ein anorganisches Material enthält, ist, wobei das anorganische Material bevorzugt eine Keramik ist, die bevorzugt aus Aluminiumoxid, Siliziumoxid oder Titandioxid besteht

11. Batteriezelle nach Anspruch 10, **dadurch gekennzeichnet, dass** der Separator (11) ein Compositematerial ist, wobei die organische Polymermembran und die andere Schicht derart fest miteinander verbunden sind, dass ihre kontaktierenden Oberflächen unlösbar verbunden sind.

12. Batteriezelle nach einem der Ansprüche 1 bis 9, **dadurch gekennzeichnet, dass** die Polymerseparatorschicht ein organisches Polymervlies ist.

13. Batteriezelle nach Anspruch 12, **dadurch gekennzeichnet, dass** das organische Polymervlies ein keramisches Material bevorzugt Aluminiumoxid, Siliziumoxid oder Titandioxid und bevorzugt zusätzlich ein Bindemittel enthält, wobei sowohl das keramische Material, wie auch das Bindemittel als Schicht auf der Oberfläche vorhanden sind und/oder in der porösen Schichtstruktur des Polymervlieses eingebracht sind.

14. Batteriezelle nach einem der vorhergehenden Ansprüche, **dadurch gekennzeichnet, dass** die positive Insertionselektrode ein aktives Material der Zusammensetzung

$$A_aM_b(X_cY_d)_eZ_f$$

umfasst,
wobei

A ein Alkalimetall, ein Erdalkalimetall, ein Metall der Gruppe 12 des Periodensystems ist, bevorzugt Natrium, Calcium, Zink oder Aluminium, besonders bevorzugt Lithium;
M ein Metall oder mehrere Metalle umfasst, ausgewählt aus der Gruppe bestehend aus den Übergangsmetallen und/ oder den Nicht-Übergangsmetallen und/ oder den Halbmetallen;
$(X_cY_d)_e$ mindestens ein erstes Anion ist;

Z mindestens ein zweites Anion ist;

wobei a≥0; b>0; c>0; d≥0; e>0 und f≥0 und
wobei a, b, c, d, e und f so gewählt sind, dass Elektroneutralität erhalten wird,
wobei
bevorzugt M ausgewählt ist aus einem oder mehreren der Metalle Titan, Vanadium, Niob, Tantal, Hafnium, Chrom, Molybdän, Wolfram, Mangan, Eisen, Osmium, Kobalt, Nickel, Palladium, Platin, Kupfer, Silber, Gold, Zink, Kadmium, Aluminium, Scandium, Yttrium, Zirkonium, Technetium, Rhenium, Ruthenium, Rhodium, Iridium, Quecksilber, Gallium, Indium, Zinn, Blei, Bismuth, Selen, Magnesium, Kalzium, Beryllium, Strontium und Barium, Bor, Silizium, Germanium, Arsen, Antimon und Tellur, bevorzugt X ein oder mehrere Elemente umfasst, ausgewählt aus den Elementen Titan, Vanadium, Chrom, Arsen, Molybdän, Wolfram, Niob, Mangan, Aluminium, Selen, Bor, Sauerstoff, Kohlenstoff, Silizium, Stickstoff, Fluor, Chlor, Brom und Iod, bevorzugt Phosphor ist, weiter bevorzugt Schwefel ist, bevorzugt Y ausgewählt ist aus einem oder mehreren Halogenen, schwefelhaltigen Gruppen, sauerstoffhaltigen Gruppen oder Mischungen davon,
bevorzugt Z ausgewählt ist aus einem oder mehreren Halogenen, hydroxidhaltigen Gruppen und Mischungen davon, bevorzugt $(X_cY_d)_e$ $PO_4$ oder $P_2O_7$ umfasst.

15. Batteriezelle nach Anspruch 14, **dadurch gekennzeichnet, dass** M das Metall Fe umfasst, wobei bevorzugt $(X_cY_d)_e$ $PO_4$ oder $P_2O_7$ ist und besonders bevorzugt f gleich 0 ist.

16. Batteriezelle nach einem der vorhergehenden Ansprüche, **dadurch gekennzeichnet, dass** die negative Insertionselektrode als aktives Material Kohlenstoff zur Aufnahme von Ionen umfasst.

17. Batteriezelle nach einem der vorhergehenden Ansprüche, **dadurch gekennzeichnet, dass** die positive Elektrode (4) und/oder negative Elektrode (5) ein Ableitelement mit einer dreidimensionalen porösen Metallstruktur, insbesondere in Form eines Metallschaums, aufweist, wobei sich bevorzugt die poröse Metallstruktur im Wesentlichen über die gesamte Dicke der positiven Elektrode und/oder der negativen Elektrode erstreckt.

18. Batteriezelle nach einem der vorhergehenden Ansprüche, **dadurch gekennzeichnet, dass** der Elektrolyt mindestens 1,5 Mol $SO_2$, bevorzugt mindestens 2 Mol $SO_2$, weiter bevorzugt mindestens 2,5 Mol $SO_2$, weiter bevorzugt mindestens 3 Mol $SO_2$, weiter bevorzugt mindestens 4 Mol $SO_2$, weiter bevorzugt mindestens 4,5 Mol $SO_2$, weiter bevorzugt mindestens 5 Mol $SO_2$, und besonders bevorzugt mindestens 6 Mol $SO_2$ je Mol Leitsalz umfasst.

19. Batteriezelle nach einem der vorhergehenden Ansprüche, **dadurch gekennzeichnet, dass** der Gehalt an $SO_2$ im Elektrolyten größer als 20 Gew% des Gewichts des Elektrolyten ist, bevorzugt größer als 35 Gew%, größer als 45 Gew%, größer als 55 Gew%, größer als 65 Gew%, größer als 75 Gew%, größer als 85 Gew%, größer als 90 Gew% oder größer als 95 Gew% des Gewichts des Elektrolyten ist.

20. Batteriezelle nach einem der vorhergehenden Ansprüche, **dadurch gekennzeichnet, dass** der Elektrolyt organische Lösungsmittel umfasst, wobei der Gehalt an organischen Lösungsmitteln kleiner als 50 Gew% des Gewichts des Elektrolyten ist, bevorzugt kleiner als 40 Gew%, kleiner als 30 Gew%, kleiner als 20 Gew%, kleiner als 15 Gew%, kleiner als 10 Gew%, kleiner als 5 Gew% oder kleiner als 1 Gew% des Gewichts des Elektrolyten ist, oder weiter bevorzugt der Elektrolyt frei von organischen Lösungsmitteln ist.

Fig.1

Fig.2

Fig.3

Fig.4a

Fig. 4b

Fig. 5

Fig. 6

Fig. 7

Europäisches
Patentamt

European
Patent Office

Office européen
des brevets

# EUROPÄISCHER RECHERCHENBERICHT

**Nummer der Anmeldung**

EP 17 17 0165

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 2 360 772 A1 (FORTU INTELLECTUAL PROPERTY AG [CH]) 24. August 2011 (2011-08-24) * Absätze [0001] - [0005], [0015] * * Tabelle 2 * * Ansprüche 1-19 * ----- | 1-20 | INV. H01M4/485 H01M4/58 H01M10/0525 H01M10/0563 |
| Y | DE 10 2013 018235 A1 (LI TEC BATTERY GMBH [DE]) 30. April 2015 (2015-04-30) * Absätze [0115], [0118], [0119] * ----- | 1-20 | |
| A | WO 02/09213 A1 (FORTU BAT BATTERIEN GMBH [DE]; HAMBITZER GUENTHER [DE]; WOLLFARTH CLAU) 31. Januar 2002 (2002-01-31) * Seite 1, Zeile 32 - Seite 2, Zeile 13 * * Seite 9, Zeilen 8-23 * * Ansprüche 1-23 * ----- | 1-20 | |
| A | US 2013/040188 A1 (ZINCK LAURENT [FR] ET AL) 14. Februar 2013 (2013-02-14) * Ansprüche 1-34 * ----- | 1-20 | RECHERCHIERTE SACHGEBIETE (IPC) |
| A | EP 1 150 368 A2 (SONY CORP [JP]) 31. Oktober 2001 (2001-10-31) * Absatz [0036] * ----- | 1-20 | H01M |

Der vorliegende Recherchenbericht wurde für alle Patentansprüche erstellt

| Recherchenort | Abschlußdatum der Recherche | Prüfer |
|---|---|---|
| Den Haag | 25. Oktober 2017 | Reich, Claus |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**  EP 17 17 0165

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2017

| Im Recherchenbericht angeführtes Patentdokument | Datum der Veröffentlichung | Mitglied(er) der Patentfamilie | Datum der Veröffentlichung |
|---|---|---|---|
| EP 2360772 A1 | 24-08-2011 | AU 2011214615 A1 | 02-08-2012 |
| | | BR 112012020118 A2 | 07-06-2016 |
| | | CA 2787918 A1 | 18-08-2011 |
| | | CN 102742049 A | 17-10-2012 |
| | | CN 102742062 A | 17-10-2012 |
| | | DK 2534719 T3 | 01-05-2017 |
| | | EP 2360772 A1 | 24-08-2011 |
| | | EP 2534719 A2 | 19-12-2012 |
| | | EP 2534725 A1 | 19-12-2012 |
| | | EP 3208869 A1 | 23-08-2017 |
| | | ES 2536892 T3 | 29-05-2015 |
| | | ES 2617354 T3 | 16-06-2017 |
| | | HK 1173267 A1 | 16-12-2016 |
| | | HK 1173854 A1 | 15-09-2016 |
| | | IL 221368 A | 29-09-2016 |
| | | JP 5901539 B2 | 13-04-2016 |
| | | JP 6083078 B2 | 22-02-2017 |
| | | JP 2013519967 A | 30-05-2013 |
| | | JP 2013519968 A | 30-05-2013 |
| | | KR 20120129960 A | 28-11-2012 |
| | | KR 20130006614 A | 17-01-2013 |
| | | PL 2534719 T3 | 31-05-2017 |
| | | RU 2012136194 A | 27-02-2014 |
| | | RU 2012137863 A | 20-03-2014 |
| | | US 2011287304 A1 | 24-11-2011 |
| | | US 2012308876 A1 | 06-12-2012 |
| | | US 2014113182 A1 | 24-04-2014 |
| | | WO 2011098232 A1 | 18-08-2011 |
| | | WO 2011098233 A2 | 18-08-2011 |
| | | ZA 201206696 B | 29-05-2013 |
| DE 102013018235 A1 | 30-04-2015 | KEINE | |
| WO 0209213 A1 | 31-01-2002 | AU 7632101 A | 05-02-2002 |
| | | DE 10192980 D2 | 22-05-2003 |
| | | WO 0209213 A1 | 31-01-2002 |
| US 2013040188 A1 | 14-02-2013 | CN 103907223 A | 02-07-2014 |
| | | EP 2742551 A2 | 18-06-2014 |
| | | ES 2627527 T3 | 28-07-2017 |
| | | HK 1199555 A1 | 03-07-2015 |
| | | JP 6207506 B2 | 04-10-2017 |
| | | JP 2014527695 A | 16-10-2014 |
| | | KR 20140064843 A | 28-05-2014 |
| | | RU 2014108066 A | 20-09-2015 |
| | | US 2013040188 A1 | 14-02-2013 |

EPO FORM P0461

Für nähere Einzelheiten zu diesem Anhang : siehe Amtsblatt des Europäischen Patentamts, Nr.12/82

Seite 1 von 2

## ANHANG ZUM EUROPÄISCHEN RECHERCHENBERICHT
## ÜBER DIE EUROPÄISCHE PATENTANMELDUNG NR.

EP 17 17 0165

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2017

| Im Recherchenbericht angeführtes Patentdokument | Datum der Veröffentlichung | Mitglied(er) der Patentfamilie | Datum der Veröffentlichung |
|---|---|---|---|
| | | US 2015004463 A1 | 01-01-2015 |
| | | WO 2013024045 A2 | 21-02-2013 |
| EP 1150368 A2 | 31-10-2001 | CA 2344981 A1 | 25-10-2001 |
| | | CN 1320976 A | 07-11-2001 |
| | | EP 1150368 A2 | 31-10-2001 |
| | | JP 3959929 B2 | 15-08-2007 |
| | | JP 2001307730 A | 02-11-2001 |
| | | KR 20010098867 A | 08-11-2001 |
| | | MX 231207 B | 10-10-2005 |
| | | TW 533617 B | 21-05-2003 |
| | | US 2002004169 A1 | 10-01-2002 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011098233 A
- US 9209458 B2
- WO 2013024045 A

**In der Beschreibung aufgeführte Nicht-Patentliteratur**

- Handbook of Batteries. McGraw-Hill, 1994